# EUROPEAN PATENT APPLICATION

(11) **EP 2 338 924 A1**
(43) Date of publication of application: **29.06.2011**
(21) Application number: 09808284.5
(22) Date of filing: 13.08.2009
(51) Int. Cl.: C08G 61/10, H01B 1/06, H01M 4/86, H01M 8/02, H01M 8/10

(54) **POLYMER, POLYMER ELECTROLYTE AND USE OF SAME**

(30) Priority: 21.08.2008 JP 2008212649
(71) Applicant: Sumitomo Chemical Company, Limited, Tokyo 104-8260 (JP)
(72) Inventor: YASHIRO, Arihiro, Tsukuba-shi Ibaraki 305-0045 (JP); SASAKI, Shigeru, Tsukuba-shi Ibaraki 300-3261 (JP)
(74) Representative: Henkel, Feiler & Hänzel
(86) International application number: PCT/JP2009/064534
(87) International publication number: WO 2010/021348

(57) **Abstract**

The present invention provides a polymer, a polymer electrolyte and the use thereof. The polymer has, as a structural unit, a phenylene group in which two or three hydrogen atoms each have been substituted with a group represented by the following formula (A), and is insoluble in water: 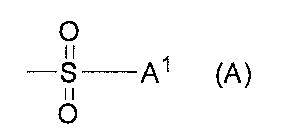 wherein A¹ represents a group represented by formula (1a), formula (1b) or formula (1c) below, and the two or three A¹ groups may be the same as or different from each other, 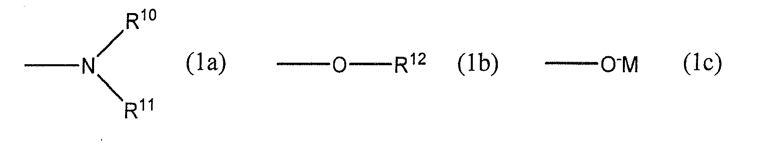 wherein R¹⁰ and R¹¹ each independently represents a hydrogen atom, an alkyl group of 1 to 20 carbon atoms, or an aryl group of 6 to 20 carbon atoms, R¹² represents a hydrogen atom, an alkyl group of 1 to 20 carbon atoms, or an aryl group of 6 to 20 carbon atoms, M represents a metal ion or an ammonium ion, and in a case where M represents a divalent or higher-valent metal ion, M may be further bonded to another substituent.

## Description

### TECHNICAL FIELD

The present invention relates to polymers that can be used favorably for proton-conducting materials for cells, and polymer electrolytes comprising the polymers.

### BACKGROUND ART

Polymers having ion-exchange groups, and particularly ion-exchange polymers having strongly acidic ion-exchange groups such as sulfonic acid groups, are currently being widely investigated for use as the proton-conducting materials that constitute the membrane of electrochemical devices such as primary cells, secondary cells, or solid polymer fuel cells (hereinafter sometimes referred to as "fuel cells"). As these proton-conducting materials, polymer electrolytes that comprise, as an active component, a polymer having perfluoroalkylsulfonic acid residues as superacids in side chains and having a main chain that is a perfluoroalkane chain (fluorine-based polymer electrolytes), which are typified by Nafion (a registered trademark of E.I. du Pont de Nemours and Company), are mainly used conventionally because as they enable the formation of fuel cells with superior electric power generation properties being formed when used as the fuel cell proton-conducting membranes (hereinafter sometimes referred to as the "proton-conducting membranes"). However, various problems have been pointed out with these fluorine-based polymer electrolytes, the problems including being extremely expensive, having low heat resistance, and being so low in membrane strength that they cannot be used practically unless some reinforcement is provided.

As a result of these circumstances, there has recently been much active research into the development of hydrocarbon-based polymer electrolytes that are inexpensive, exhibit excellent properties, and can be used in place of fluorine-based polymer electrolytes.

For example, the specification of US-5,403,675 (columns 9 to 11, and FIG. 4) disclose a sulfonated polyarylene-based polymer electrolyte prepared by sulfonating a polyarylene-based polymer.

### DISCLOSURE OF INVENTION

However, the proton conductivity of hydrocarbon-based polymer electrolytes such as the sulfonated polyarylene-based polymer electrolyte disclosed in the specification of US-5,403,675 (columns 9 to 11, and FIG. 4) cannot be claimed to be entirely satisfactory. In particular, there is a need for fuel cell proton-conducting membranes that exhibit satisfactory proton conductivity even under conditions of low humidity. The proton conductivity of the sulfonated polyarylene-based polymer electrolyte disclosed in the specification of US-5,403,675 (columns 9 to 11, and FIG. 4) is inadequate under these types of low-humidity conditions.

Accordingly, objects of the present invention are to provide a novel polymer and polymer electrolyte which are capable of forming a proton-conducting membrane that has excellent proton conductivity, and exhibits satisfactory proton conductivity even under conditions of low humidity.

As a result of intensive investigation aimed at achieving the above objects, the inventors of the present invention were able to complete the present invention. In other words, the present invention provides a polymer of the following <1>.
<1> A polymer that is insoluble in water and that has, as a structural unit, a phenylene group in which two or three hydrogen atoms each have been substituted with a group represented by the following formula (A): 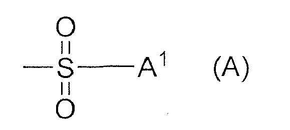 wherein A¹ represents a group represented by formula (1a), formula (1b) or formula (1c) below, and the two or three A¹ groups may be the same as or different from each other, 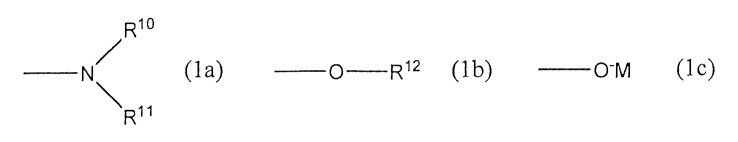 wherein R¹⁰ and R¹¹ each independently represents a hydrogen atom, an alkyl group of 1 to 20 carbon atoms, or an aryl group of 6 to 20 carbon atoms, R¹² represents a hydrogen atom, an alkyl group of 1 to 20 carbon atoms, or an aryl group of 6 to 20 carbon atoms, M represents a metal ion or an ammonium ion, and in a case where M represents a divalent or higher-valent metal ion, M may be further bonded to another substituent.
   The present invention also provides the following <2> as a preferred embodiment relating to the above-mentioned <1>.
<2> The polymer according to <1>, wherein the structural unit is represented by formula (1): 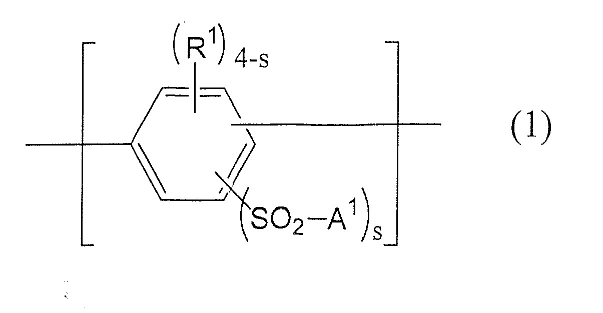 wherein s represents 2 or 3, R¹ represents a hydrogen atom, fluorine atom, alkyl group, alkoxy group, aryl group, aryloxy group, acyl group or cyano group, in a case where s represents 2, the two R¹ groups may be the same as or different from each other, and A¹ is as defined above.
   Further, the present invention also provides <3> and <4>.
<3> A polymer, wherein the main chain has a polyarylene structure composed of a plurality of aromatic rings that are linked together substantially by direct bonds, and the polyarylene structure comprises a structural unit represented by formula (1) and a structural unit represented by formula (2): 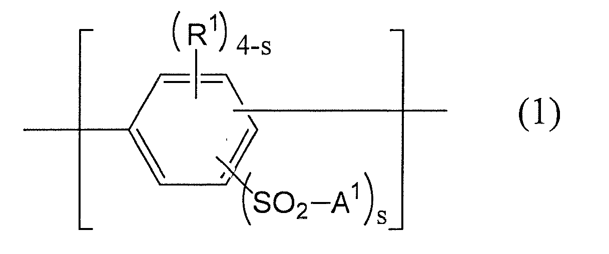 wherein s represents 2 or 3, A¹ represents a group represented by formula (1a), formula (1b) or formula (1c) below, and the two or three A¹ groups may be the same as or different from each other, R¹ represents a hydrogen atom, a fluorine atom, an alkyl group of 1 to 20 carbon atoms that may have a substituent, an alkoxy group of 1 to 20 carbon atoms that may have a substituent, an aryl group of 6 to 20 carbon atoms that may have a substituent, an aryloxy group of 6 to 20 carbon atoms that may have a substituent, an acyl group of 2 to 20 carbon atoms that may have a substituent, or a cyano group, and in a case where s represents 2, the two R¹ groups may be the same as or different from each other, 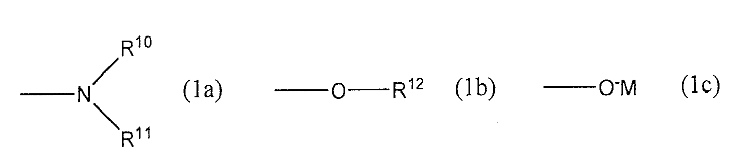 wherein R¹⁰ and R¹¹ each independently represents a hydrogen atom, an alkyl group of 1 to 20 carbon atoms, or an aryl group of 6 to 20 carbon atoms, R¹² represents a hydrogen atom, an alkyl group of 1 to 20 carbon atoms, or an aryl group of 6 to 20 carbon atoms, M represents a metal ion or an ammonium ion, and in a case where M represents a divalent or higher-valent metal ion, M may be further bonded to another substituent, 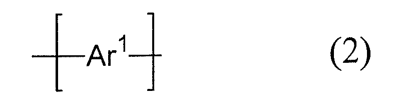 wherein Ar¹ represents a divalent aromatic group, and the aromatic group may be substituted with a group selected from the group consisting of a fluorine atom, alkyl groups of 1 to 20 carbon atoms that may have a substituent, alkoxy groups of 1 to 20 carbon atoms that may have a substituent, aryl groups of 6 to 20 carbon atoms that may have a substituent, aryloxy groups of 6 to 20 carbon atoms that may have a substituent, and acyl groups of 2 to 20 carbon atoms that may have a substituent.
<4> A polymer comprising a structural unit represented by formula (1) and a structural unit represented by formula (2a): 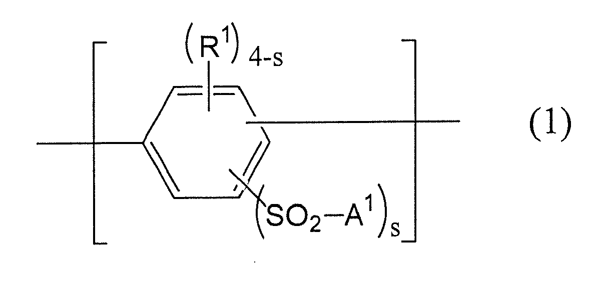 wherein s represents 2 or 3, A¹ represents a group represented by formula (1a), formula (1b) or formula (1c) below, and the two or three A¹ groups may be the same as or different from each other, R¹ represents a hydrogen atom, a fluorine atom, an alkyl group of 1 to 20 carbon atoms that may have a substituent, an alkoxy group of 1 to 20 carbon atoms that may have a substituent, an aryl group of 6 to 20 carbon atoms that may have a substituent, an aryloxy group of 6 to 20 carbon atoms that may have a substituent, an acyl group of 2 to 20 carbon atoms that may have a substituent, or a cyano group, and in a case where s represents 2, the two R¹ groups may be the same as or different from each other, 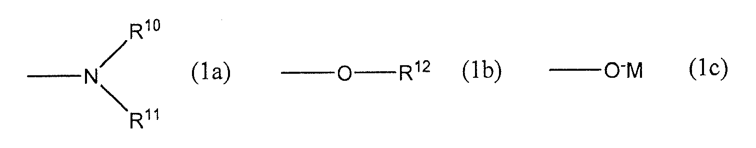 wherein R¹⁰ and R¹¹ each independently represents a hydrogen atom, an alkyl group of 1 to 20 carbon atoms, or an aryl group of 6 to 20 carbon atoms, R¹² represents a hydrogen atom, an alkyl group of 1 to 20 carbon atoms, or an aryl group of 6 to 20 carbon atoms, M represents a metal ion or an ammonium ion, and in a case where M represents a divalent or higher-valent metal ion, M may be further bonded to another substituent, 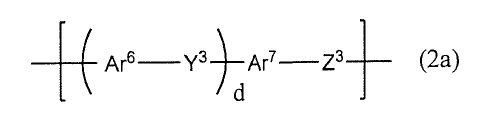 wherein d represents 0 or 1, Ar⁶ and Ar⁷ each independently represents a divalent aromatic group, the aromatic group may be substituted with a group selected from the group consisting of a fluorine atom, alkyl groups of 1 to 20 carbon atoms that may have a substituent, alkoxy groups of 1 to 20 carbon atoms that may have a substituent, aryl groups of 6 to 20 carbon atoms that may have a substituent, aryloxy groups of 6 to 20 carbon atoms that may have a substituent, and acyl groups of 2 to 20 carbon atoms that may have a substituent, Y³ represents a single bond, a carbonyl group, a sulfonyl group, a 2,2-isopropylidene group, a 2,2-hexafluoroisopropylidene group or a fluorene-9,9-diyl group, and Z³ represents an oxygen atom or a sulfur atom.
   Moreover, the present invention also provides the following <5> to <15> as preferred embodiments.
<5> The polymer according to <4> comprising a block represented by formula (4): 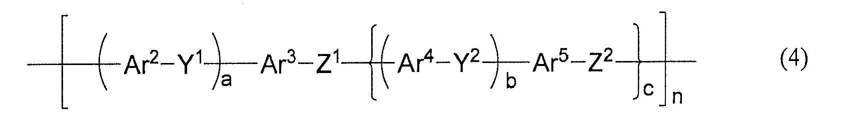 wherein a, b and c are the same as or different from each other, and each represents 0 or 1, n represents an integer of not less than 5, Ar², Ar³, Ar⁴ and Ar⁵ represent divalent aromatic groups which may be the same as or different from each other, each divalent aromatic group may be substituted with at least one substituent selected from the group consisting of a fluorine atom, a cyano group, alkoxy groups of 1 to 20 carbon atoms, aryl groups of 6 to 20 carbon atoms, and aryloxy groups of 6 to 20 carbon atoms, Y¹ and Y² each independently represents a single bond, a carbonyl group, a sulfonyl group, a 2,2-isopropylidene group, a 2,2-hexafluoroisopropylidene group or a fluorene-9,9-diyl group, and Z¹ and Z² each independently represents an oxygen atom or a sulfur atom.
<6> The polymer according to <4> or <5> further comprising a structural unit represented by formula (2): 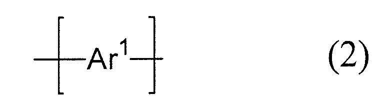 wherein Ar¹ represents a divalent aromatic group, and the aromatic group may be substituted with a group selected from the group consisting of a fluorine atom, alkyl groups of 1 to 20 carbon atoms that may have a substituent, alkoxy groups of 1 to 20 carbon atoms that may have a substituent, aryl groups of 6 to 20 carbon atoms that may have a substituent, aryloxy groups of 6 to 20 carbon atoms that may have a substituent, and acyl groups of 2 to 20 carbon atoms that may have a substituent.
<7> The polymer according to any one of <3> to <6>, wherein the polymer is insoluble in water.
<8> The polymer according to any one of <2> to <7> comprising, as the structural unit represented by the formula (1), a structural unit in which s represents 2.
<9> The polymer according to any one of <2> to <8> comprising, as the structural unit represented by the formula (1), a structural unit represented by the following formula (1X) or a structural unit represented by the following formula (1Y): 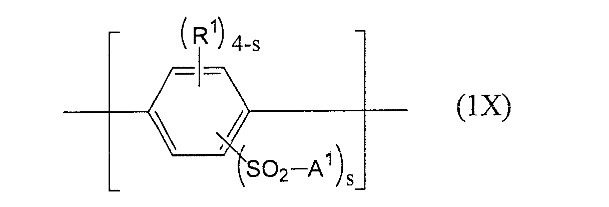 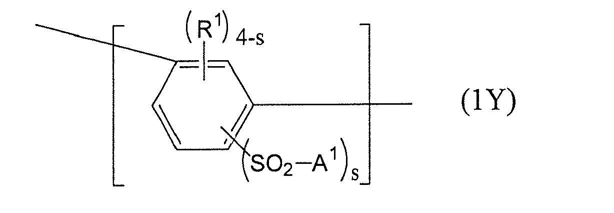 wherein A¹, R¹ and s are the same as defined for the formula (1).
<10> The polymer according to any one of <2> to <9> comprising a structure represented by the following formula (1Z): 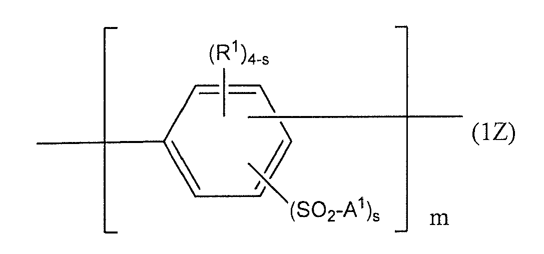 wherein A¹, R¹ and s are the same as defined for the formula (1), and m represents an integer of not less than 5.
<11> The polymer according to any one of <2> to <10> comprising, as the structural unit represented by the formula (1), a structural unit in which two groups among the plurality of groups represented by -SO₂-A¹ are bonded to the benzene ring in mutual p-positions.
<12> The polymer according to any one of <2> to <11>comprising, as the structural unit represented by the formula (1), a structural unit in which at least one of the plurality of groups represented by A¹ is -OH.
<13> The polymer according to any one of <2> to <12>, wherein if the combined total of all structural units is deemed to be 100 mol%, the amount of the structural unit represented by the formula (1) is within a range of not less than 1 mol% and not more than 99 mol%.
<14> A polymer electrolyte comprising the polymer according to any one of <1> to <13>.
<15> A polymer electrolyte membrane comprising the polymer electrolyte according to <14>.
   Furthermore, the present invention also provides <16>.
<16> A polymer electrolyte membrane comprising a polymer having, as a structural unit, a phenylene group in which two or three hydrogen atoms each have been substituted with a group represented by the following formula (A): 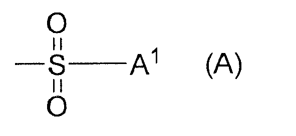 wherein A¹ represents a group represented by formula (1a), formula (1b) or formula (1c) below, and the two or three A¹ groups may be the same as or different from each other, 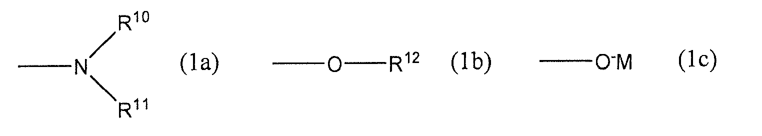 wherein R¹⁰ and R¹¹ each independently represents a hydrogen atom, an alkyl group of 1 to 20 carbon atoms, or an aryl group of 6 to 20 carbon atoms, R¹² represents a hydrogen atom, an alkyl group of 1 to 20 carbon atoms, or an aryl group of 6 to 20 carbon atoms, M represents a metal ion or an ammonium ion, and in a case where M represents a divalent or higher-valent metal ion, M may be further bonded to another substituent.
   Moreover, the present invention also provides the following <17> to <19> as preferred embodiments.
<17> A catalyst composition comprising the polymer electrolyte according to <14> and a catalyst material.
<18> A membrane electrode assembly comprising a catalyst layer formed from the polymer electrolyte membrane according to <15> or <16>, or from the catalyst composition according to <17>.
<19> A solid polymer fuel cell comprising the membrane electrode assembly according to <18>.

### EMBODIMENT FOR CARRYING OUT THE INVENTION

A description of the best embodiments for carrying out the present invention is presented below.

The polymer of the present invention has, as a structural unit, a phenylene group in which two or three hydrogen atoms each have been substituted with a group represented by the following formula (A), and is insoluble in water.

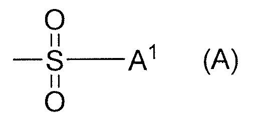

In formula (1), A¹ represents a group represented by formula (1a), formula (1b) or formula (1c) shown below, and the two or three A¹ groups may be the same as or different from each other: 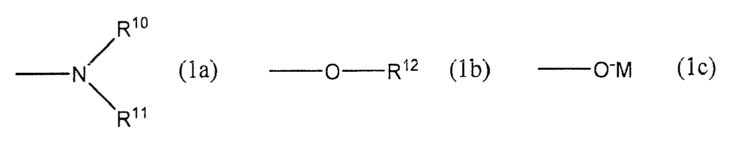 wherein R¹⁰ and R¹¹ each independently represents a hydrogen atom, an alkyl group of 1 to 20 carbon atoms, or an aryl group of 6 to 20 carbon atoms, R¹² represents a hydrogen atom, an alkyl group of 1 to 20 carbon atoms, or an aryl group of 6 to 20 carbon atoms, M represents a metal ion or an ammonium ion, and in a case where M represents a divalent or higher-valent metal ion, M may be further bonded to another substituent.

In the formula (1), in a case where all of the groups represented by -SO₂-A¹ are groups other than a sulfonic acid group (-SO₂H), the structural unit represented by formula (1) does not exhibit proton conductivity. If such a group represented by -SO₂-A¹ that is other than a sulfonic acid group is, in a sense, a precursor group to a sulfonic acid group, which can be easily converted to a sulfonic acid group, and polymers containing such a precursor group are included within the scope of the present invention as precursors to polymers that exhibit excellent proton conductivity.

A description relating to the groups represented by formula (1a), formula (1b) and formula 1 (c), including specific examples, is presented below.

In a case where A¹ is a group represented by formula (1a), the total number of the carbon atoms in R¹⁰ and the carbon atoms in R¹¹ is preferably within a range of 2 to 30. Examples of preferred groups represented by formula (1a) include a diethylamino group, a n-propylamino group, a di-n-propylamino group, an isopropylamino group, a diisopropylamino group, a n-butylamino group, a di-n-butylamino group, a sec-butylamino group, a di-sec-butylamino group, a tert-butylamino group, a di-tert-butylamino group, a n-pentylamino group, a 2,2-dimethylpropylamino group, a n-hexylamino group, a cyclohexylamino group, a n-heptylamino group, a n-octylamino group, a n-nonylamino group, a n-decylamino group, a n-undecylamino group, a n-dodecylamino group, a n-tridecylamino group, a n-tetradecylamino group, a n-pentadecylamino group, a n-hexadecylamino group, a n-heptadecylamino group, a n-octadecylamino group, a n-nonadecylamino group, a n-eicosylamino group, a pyrrolyl group, a pyrrolidinyl group, a piperidinyl group, a carbazolyl group, a dihydroindolyl group and a dihydroisoindolyl group. Among these, a diethylamino group or a n-dodecylamino group is preferred. Groups represented by -SO₂-A¹ containing as A¹ the groups represented by formula (1a) examples of which are provided above as A¹ are precursor groups to sulfonic acid groups, and these precursor groups can be easily converted to sulfonic acid groups, for example by a hydrolysis treatment. The hydrolysis treatment for converting such precursor groups to sulfonic acid groups is described below.

In a case where A¹ is a group represented by formula (1b), when R¹² is a hydrogen atom, the group represented by -SO₂-A¹ can be a sulfonic acid group (-SO₂-OH) that exhibits proton conductivity. When R¹² is an alkyl group or an aryl group, the group represented by -SO₂-A¹ is a precursor group to a sulfonic acid group and can be easily converted to a sulfonic acid group, for example, by a hydrolysis treatment. This hydrolysis treatment is also described below.

Further, in formula (1c), M represents a metal ion or an ammonium ion. In these cases, the group represented by -SO₂-A¹ corresponds to a sulfonic acid group in the form of a salt with the metal ion or the ammonium ion, and a sulfonic acid group in the salt form can be easily converted to a sulfonic acid group by a conventional ion-exchange treatment.

In a case where R¹² is an alkyl group or aryl group, simple examples of the alkyl group or the aryl group are as follows.

Examples of the alkyl group include a methyl group, an ethyl group, a n-propyl group, an isopropyl group, a n-butyl group, an isobutyl group, a sec-butyl group, a tert-butyl group, a n-pentyl group, a 2,2-dimethylpropyl group, a n-hexyl group, a cyclohexyl group, a n-heptyl group, a n-octyl group, a n-nonyl group, a n-decyl group, a n-undecyl group, a n-dodecyl group, a n-tridecyl group, a n-tetradecyl group, a n-pentadecyl group, a n-hexadecyl group, a n-heptadecyl group, a n-octadecyl group, a n-nonadecyl group, a n-eicosyl group, phenyl group, 1,3-butadiene-1,4-diyl group, butane-1,4-diyl group, pentane-1,5-diyl group, biphenyl-2,2'-diyl group, and o-xylylene group.

Further, examples of the aryl group include a phenyl group, 1-naphthyl group, 2-naphthyl group, 3-phenanthryl group, and 2-anthryl group.

In a case where M represents a metal ion or ammonium ion, examples of these ions are as follows.

An alkali metal ion or alkaline earth metal ion is preferred as the metal ion because an ion-exchange technique can be used to easily achieve conversion to a sulfonic acid group. Examples of the alkali metal ion include a lithium ion, a sodium ion and a potassium ion. Examples of the alkaline earth metal ion include a magnesium ion, a calcium ion and a barium ion. Because alkaline earth metal ions are divalent cations, usually, either 1 mol of the alkaline earth metal ions are ionically bonded to 2 mols of sulfonic acid groups to achieve electrostatic equivalence, or 1 mol of the alkaline earth metal ions are ionically bonded to 1 mol of sulfonic acid groups and 1 mol of another monovalent anion to achieve electrostatic equivalence. Examples of such other monovalent anion include alkylsulfonate anions, arylsulfonate anions, alkylsulfate anions, arylsulfate anions, alkylcarboxylate anions, arylcarboxylate anions, or a chloro anion, bromo anion, iodo anion or hydroxide ion.

The ammonium ion may be any of a primary ammonium ion, a secondary ammonium ion, a tertiary ammonium ion, or a quaternary ammonium ion. Examples of primary ammonium ions include a methylammonium ion, an ethylammonium ion, a 1-propylammonium ion, a 2-propylammonium ion, a n-butylammonium ion, a 2-butylammonium ion, a 1-pentylammonium ion, a 2-pentylammonium ion, a 3-pentylammonium ion, a neopentylammonium ion, a cyclopentylammonium ion, a 1-hexylammonium ion, a 2-hexylammonium ion, a 3-hexylammonium ion and a cyclohexylammonium ion. Examples of secondary ammonium ions include a dimethylammonium ion, a diethylammonium ion, a di-1-propylammonium ion, a di-2-propylammonium ion, a di-n-butylammonium ion, a di-2-butylammonium ion, a di-1-pentylarnmonium ion, a di-2-pentylammonium ion, a di-3-pentylammonium ion, a dineopentylammonium ion, a dicyclopentylammonium ion, a di-1-hexylammonium ion, a di-2-hexylammonium ion, a di-3-hexylammonium ion and ammonium ion. Examples of tertiary ammonium ions include trimethylamine, triethylamine, a tri-1-propylammonium ion, a tri-2-propylammonium ion, a tri-n-butylammonium ion, a tri-2-butylammonium ion, a tri-1-pentylammonium ion, a tri-2-pentylammonium ion, a tri-3-pentylammonium ion, a trineopentylammonium ion, a tricyclopentylammonium ion, a tri-1-hexylammonium ion, a tri-2-hexylammonium ion, a tri-3-hexylammonium ion and ammonium ion. Examples of quaternary ammonium ions include a tetramethylammonium ion, a tetraethylammonium ion, a tetra(1-propyl)ammonium ion, a tetra(2-propyl)ammonium ion, a tetra(1-butyl)ammonium ion, a tetra(2-butyl)ammonium ion, a tetra(1-pentyl)ammonium ion, a tetra(2-pentyl)ammonium ion, a tetra(3-pentyl)ammonium ion, a tetra(neopentyl)ammonium ion, a tetra(1-cyclopentyl)ammonium ion, a tetra(1-hexyl)ammonium ion, a tetra(2-hexyl)ammonium ion, a tetra(3-hexylamine)ammonium ion and a tetra(cyclohexyl)ammonium ion.

In a case where the group represented by -SO₂-A¹ is a precursor group to sulfonic acid, the precursor group is preferably a group represented by formula (1b) in which R¹² is an alkyl group. Such a group represented by -SO₂-A¹ tends to be more easily converted to a sulfonic acid group by hydrolysis treatment or the like. Further, a structural unit represented by formula (1) containing such a group represented by -SO₂-A¹ is more easily introduced into a polymer during the production of a polymer of the present invention described below.

In the above-mentioned phenylene group, a hydrogen atom may be substituted with a group other than the groups represented by -SO₂-A¹. Examples of the group represented by -SO₂-A¹ include those groups provided as examples below for R¹ (excluding a hydrogen atom).

The above-mentioned structural unit is preferably a structural unit represented by formula (1): 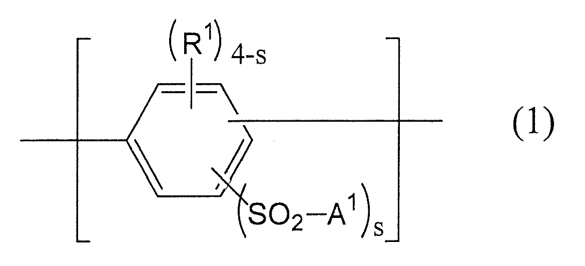 wherein s represents 2 or 3, R¹ represents a hydrogen atom, a fluorine atom, an alkyl group, an alkoxy group, an aryl group, an aryloxy group, an acyl group or a cyano group, in a case where s represents 2, the two R¹ groups may be the same as or different from each other, and A¹ is as defined above.

A description of those groups in the formula (1) other than the groups represented by -SO₂-A¹, namely R¹, is presented below. As mentioned above, R¹ represents a hydrogen atom, a fluorine atom, an alkyl group, an alkoxy group, an aryl group, an aryloxy group or an acyl group, and in a case where R¹ represents an alkyl group, examples of the alkyl group include linear, branched or cyclic alkoxy groups such as a methyl group, an ethyl group, a n-propyl group, an isopropyl group, a n-butyl group, a sec-butyl group, an isobutyl group, a tert-butyl group, a n-pentyl group, a 2,2-dimethylpropyl group, a n-hexyl group, a cyclohexyl group, a n-heptyl group, a n-octyl group, a n-nonyl group, a n-decyl group, a n-undecyl group, a n-dodecyl group, a n-tridecyl group, a n-tetradecyl group, a n-pentadecyl group, a n-hexadecyl group, a n-heptadecyl group, a n-octadecyl group, a n-nonadecyl group and a n-eicosyl group. In the alkyl groups exemplified here, a portion of the hydrogen atoms each may be substituted with an alkoxy group, an aryl group or a halogen atom. In the case of an alkyl group in which a portion of the hydrogen atoms each have been substituted with an alkoxy group or an aryl group, the number of carbon atoms in the alkyl group is limited to not more than 20.

In a case where R¹ represents an alkoxy group, examples of the alkoxy group include linear, branched or cyclic alkoxy groups such as a methoxy group, an ethoxy group, a n-propoxy group, an isopropoxy group, a n-butoxy group, a sec-butoxy group, an iso-butoxy group, a tert-butoxy group, a n-pentyloxy group, a 2,2-dimethylpropoxy group, a n-hexyloxy group, a cyclohexyloxy group, a n-heptyloxy group, a n-octyloxy group, a n-nonyloxy group, a n-decyloxy group, a n-undecyloxy group, a n-dodecyloxy group, a n-tridecyloxy group, a n-tetradecyloxy group, a n-pentadecyloxy group, a n-hexadecyloxy group, a n-heptadecyloxy group, a n-octadecyloxy group, a n-nonadecyloxy group and a n-eicosyloxy group. In the alkoxy groups exemplified here, a portion of the hydrogen atoms each may be substituted with an aryl group or a halogen atom. In the case of an alkoxy group in which a portion of the hydrogen atoms each have been substituted with an aryl group, the number of carbon atoms in the alkoxy group is limited to not more than 20.

Among such alkoxy groups, R¹ in formula (1) is preferably an iso-butoxy group, a 2,2-dimethylpropoxy group or a cyclohexyloxy group.

In a case where R¹ represents an aryl group, examples of the aryl group include a phenyl group, a 1-naphthyl group, a 2-naphthyl group, a 3-phenanthryl group and a 2-anthryl group.

In a case where R¹ represents an aryloxy group, examples of the aryloxy group include a phenoxy group, a 1-naphthyloxy group, a 2-naphthyloxy group, a 3-phenanthryloxy group and a 2-anthryloxy group.

In a case where R¹ represents an acyl group, examples of the acyl group include an acetyl group, a propionyl group, a butyryl group, an isobutyryl group, a benzoyl group, a 1-naphthoyl group and a 2-naphthoyl group.

In the above-mentioned polymer, if the combined total of all structural units is deemed to be 100 mol%, the amount of the structural unit represented by the formula (1) is preferably within a range of not less than 1 mol% and not more than 99 mol%.

In the present invention, "insoluble in water" means that even when immersed in water at 23°C (for one hour or longer), it can be confirmed visually that the shape of the membrane is satisfactorily maintained.

Further, a polymer of the present invention has a main chain which is a polyarylene structure composed of a plurality of aromatic rings that are linked together substantially by direct bonds, wherein the polyarylene structure comprises a structural unit represented by the following formula (1) and a structural unit represented by the following formula (2).

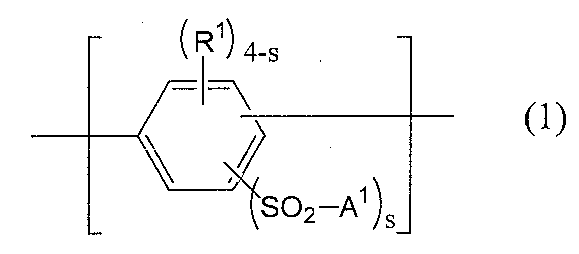

In formula (1), s represents 2 or 3, R¹ represents a hydrogen atom, a fluorine atom, an alkyl group of 1 to 20 carbon atoms that may have a substituent, an alkoxy group of 1 to 20 carbon atoms that may have a substituent, an aryl group of 6 to 20 carbon atoms that may have a substituent, an aryloxy group of 6 to 20 carbon atoms that may have a substituent, an acyl group of 2 to 20 carbon atoms that may have a substituent, or a cyano group, and in a case where s represents 2, the two R¹ groups may be the same as or different from each other.

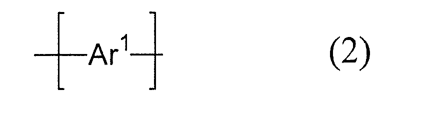

In formula (2), Ar¹ represents a divalent aromatic group, and the aromatic group may be substituted with a group selected from the group consisting of a fluorine atom, alkyl groups of 1 to 20 carbon atoms that may have a substituent, alkoxy groups of 1 to 20 carbon atoms that may have a substituent, aryl groups of 6 to 20 carbon atoms that may have a substituent, aryloxy groups of 6 to 20 carbon atoms that may have a substituent, and acyl groups of 2 to 20 carbon atoms that may have a substituent.

The inventors of the present invention have discovered that by including the structural unit represented by formula (2), the above polymer is able to maintain a degree of strength that is high enough for practical applications as a proton-conducting material for a fuel cell, and in particular, a degree of strength that is satisfactory for use as a proton-conducting membrane for a fuel cell.

Specific examples of A¹ and R¹ include the same groups as those described above.

In formula (2), examples of Ar¹ include divalent monocyclic aromatic groups such as a 1,3-phenylene group and a 1,4-phenylene group; divalent condensed cyclic aromatic groups such as a naphthalene-1,3-diyl group, a naphthalene-1,4-diyl group, a naphthalene-1,5-diyl group, a naphthalene-1,6-diyl group, a naphthalene-1,7-diyl group, a naphthalene-2,6-diyl group and a naphthalene-2,7-diyl group; and divalent hetero aromatic groups such as a pyridine-2,5-diyl group, a pyridine-2,6-diyl group, a quinoxaline-2,6-diyl group and a thiophene-2,5-diyl group. Of these, divalent monocyclic aromatic groups and divalent condensed cyclic aromatic groups are preferred, a group selected from the group consisting of a 1,3-phenylene group, a 1,4-phenylene group, a naphthalene-1,4-diyl group, a naphthalene-1,5-diyl group, a naphthalene-2,6-diyl group and a naphthalene-2,7-diyl group is more preferred, a 1,3-phenylene group or a 1,4-phenylene group is still more preferred, and a 1,4-phenylene group is particularly preferred.

The Ar¹ may be substituted with at least one aromatic substituent selected from the group consisting of a fluorine atom, a cyano group, alkoxy groups of 1 to 20 carbon atoms that may have a substituent, acyl groups of 1 to 20 carbon atoms that may have a substituent, aryl groups of 6 to 20 carbon atoms that may have a substituent and aryloxy groups of 6 to 20 carbon atoms that may have a substituent. However, the substituents that may optionally exist within these alkyl groups, alkoxy groups, acyl groups, aryl groups and aryloxy groups do not comprise ion-exchange groups such as a sulfonic acid group, nor precursor groups to ion-exchange groups that can be easily converted to ion-exchange groups.

Furthermore, the inventors of the present invention have discovered that of these aromatic substituents, acyl groups having an aromatic ring are useful, and of such acyl groups, a benzoyl group is particularly useful. A polymer of the present invention having such an acyl group as an aromatic ring substituent tends to exhibit an even better level of proton conductivity. Although the reason for this is unclear, it is surmised that the electron withdrawing property of the acyl group increases the ion dissociability of the sulfonic acid groups in the polymer. Further, in a case where the polymer has such an acyl group as an aromatic ring substituent, two structural units containing the acyl group may occur adjacently to each other, and in some cases the acyl groups in these two structural units may bond mutually together, whereas in other cases the thus mutually bonded acyl groups may undergo a subsequent rearrangement reaction. Even in these cases where aromatic ring substituents have been mutually linked, those cases where the aromatic ring substituents resulting from the bonding (the rearrangement reaction) corresponds to one of an alkyl group of 1 to 20 carbon atoms that may have a substituent, an alkoxy group of 1 to 20 carbon atoms that may have a substituent, an aryl group of 6 to 20 carbon atoms that may have a substituent, an aryloxy group of 6 to 20 carbon atoms that may have a substituent, or an acyl group of 2 to 20 carbon atoms that may have a substituent are included within the definition of the polymer of the present invention. Furthermore, confirmation as to whether or not reactions such as the mutual bonding of aromatic ring substituents or subsequent rearrangement reaction following bonding have occurred can be made by measurement of the ¹³C nuclear magnetic resonance spectrum.

Specific examples of the alkyl groups, alkoxy groups, acyl groups and aryl groups that are substituents of Ar¹ include the same groups as those described above for R¹ in the formula (1).

Examples of the aryloxy group include a phenoxy group and a naphthoxy group.

The following divalent aromatic groups are preferred as the structural unit represented by formula (2).

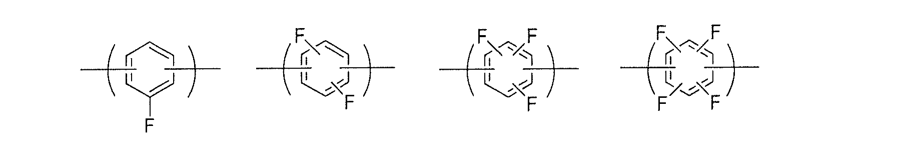

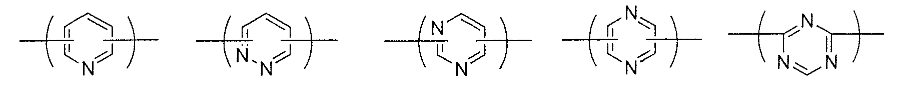

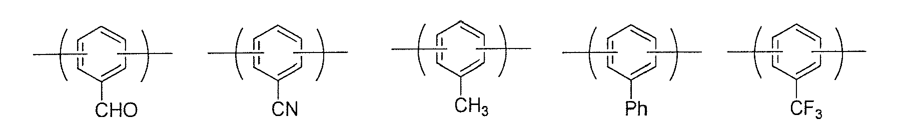

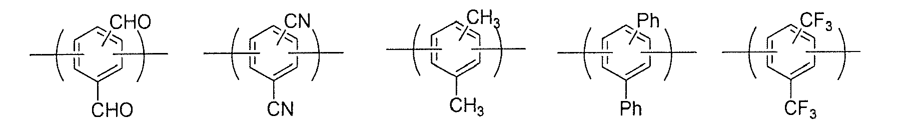

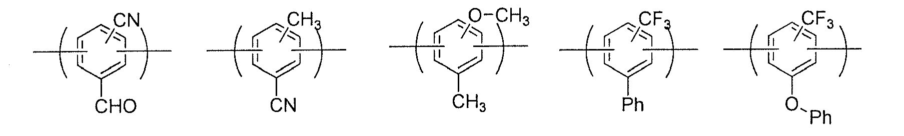

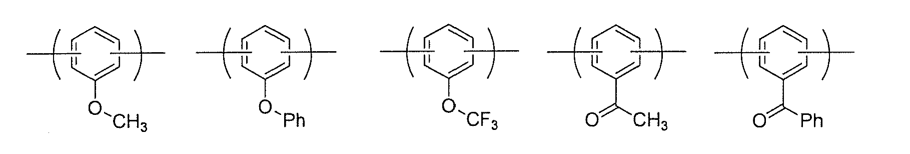

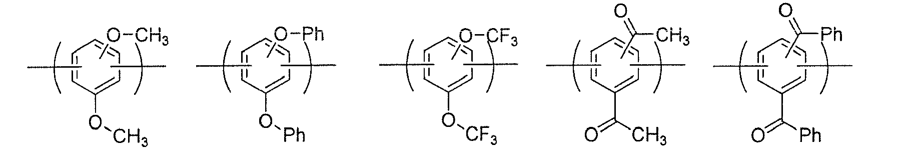

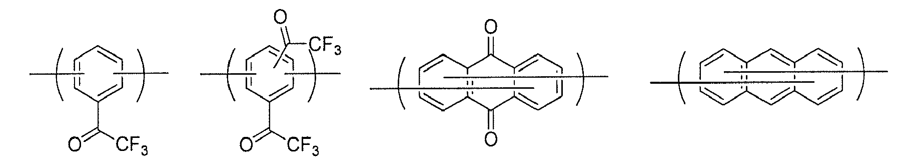

In the above-mentioned polymer, the ratio of the structural units represented by formula (1) to the structural units represented by formula (2), or the ratio of the structural units represented by formula (1) to the combination of the structural units represented by formula (2) and other structural units may be selected within such a range that results in the structural units represented by formula (1), particularly structural units represented by formula (1) that contain a sulfonic acid group are capable of exhibiting a high degree of proton conductivity, and if the combined total of all the structural units that constitute the polymer is deemed to be 100 mol%, the amount of the structural units represented by formula (1) is preferably within a range of not less than 1 mol% and not more than 99 mol%, more preferably within a range of not less than 5 mol% and not more than 95 mol%, and still more preferably within a range of not less than 10 mol% and not more than 90 mol%.

A polymer containing the structural unit represented by formula (1), and particularly a structural unit represented by formula (1) that contains a sulfonic acid group, in the molar fraction is able to exhibit practically applicable levels of water resistance and heat resistance, while satisfactorily maintaining the high degree of proton conductivity exhibited by the structural unit, and is therefore particularly useful for use as a proton-conducting material for a fuel cell or the like.

From such a viewpoint, if the combined total of all the structural units that constitute the polymer is deemed to be 100 mol%, the amount of the structural units represented by formula (2) is preferably within a range of not less than 1 mol% and not more than 99 mol%, more preferably within a range of not less than 5 mol% and not more than 95 mol%, still more preferably within a range of not less than 10 mol% and not more than 90 mol%, and still more preferably within a range of not less than 20 mol% and not more than 80 mol%. Properties such as heat resistance and water resistance tend to be superior when the amount of the structural units represented by formula (2) satisfies such a range.

Further, if the combined total of all the structural units in the polymer is deemed to be 100 mol%, the combination of the structural units represented by formula (1) and the structural units represented by formula (2) is preferably not less than 80 mol%, more preferably not less than 90 mol%, still more preferably not less than 95 mol%, and still more preferably 99 mol% or more.

Furthermore, the above-mentioned polymer may contain a structural unit represented by the following formula (3) as a structural unit other than the structural unit represented by the formula (1) and the structural unit represented by the formula (2): 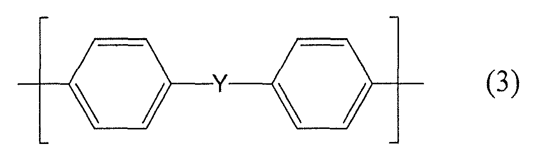 wherein Y represents a carbonyl group, a sulfonyl group, a 2,2-isopropylidene group, a 2,2-hexafluoroisopropylidene group or a fluorene-9,9-diyl group.

If the combined total of all the structural units that constitute the polymer is deemed to be 100 mol%, the structural unit represented by formula (3) can be included in a molar fraction of not more than 20 mol%, preferably not more than 10 mol%, still more preferably not more than 5 mol%, and particularly preferably not more than 1 mol%. When the structural unit represented by formula (3) is included in such a molar fraction, properties such as the mechanical strength, the heat resistance and the water resistance of the polymer itself tend to improve.

Furthermore, the above-mentioned polymer may also be a block copolymer containing the above polyarylene structure as one block, in combination with another block. In such cases, a block copolymer having a block such as that represented by the following formula (4) as the other block is preferable.

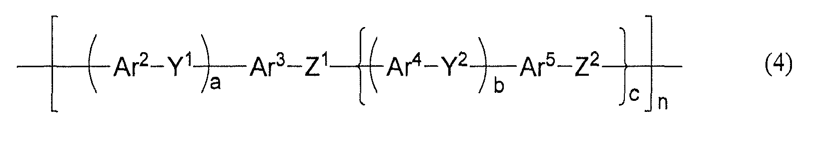

In the above formula, a, b and c are the same as or different from each other, and each represents 0 or 1, and n represents an integer of not less than 5; Ar², Ar³, Ar⁴ and Ar⁵ represent divalent aromatic groups, which may be the same as or different from each other; these divalent aromatic groups may be substituted with at least one substituent selected from the group consisting of a fluorine atom, a cyano group, alkoxy groups of 1 to 20 carbon atoms, aryl groups of 6 to 20 carbon atoms, and aryloxy groups of 6 to 20 carbon atoms; Y¹ and Y² each independently represents a single bond, a carbonyl group, a sulfonyl group, a 2,2-isopropylidene group, a 2,2-hexafluoroisopropylidene group or a fluorene-9,9-diyl group; and Z¹ and Z² each independently represents an oxygen atom or a sulfur atom.

In the case of a block copolymer containing a block having a polyarylene structure comprising a structural unit represented by formula (1) and a structural unit represented by formula (2), and a block represented by formula (4), the block copolymer may have a configuration in which these blocks are bonded directly together, or a configuration in which the blocks are bonded together via a suitable atom or group of atoms.

Representative examples of preferred blocks represented by the above formula (4) include the following (6a) to (6m).

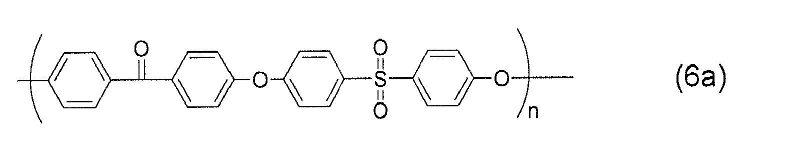

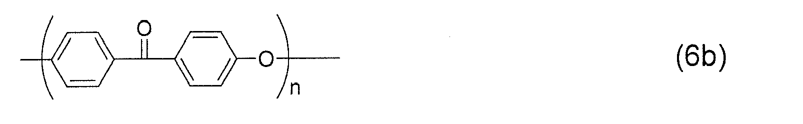

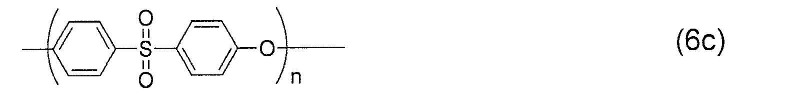

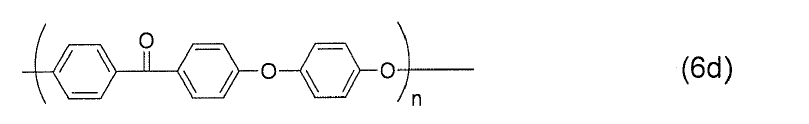

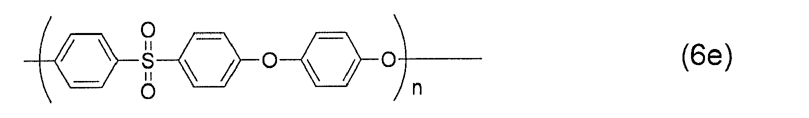

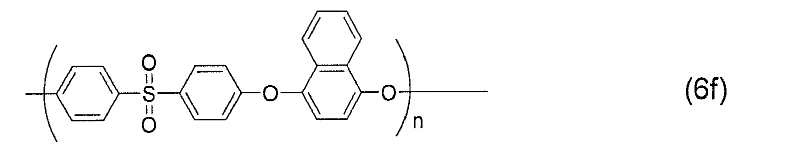

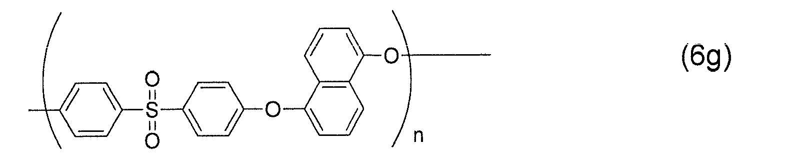

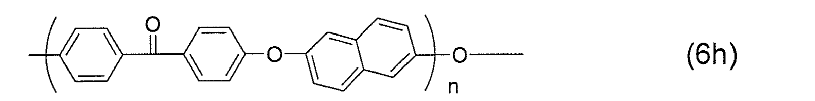

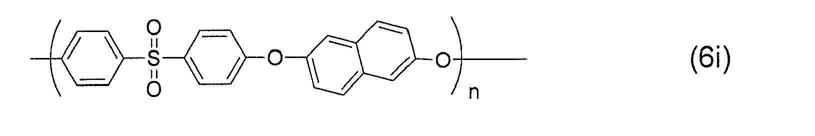

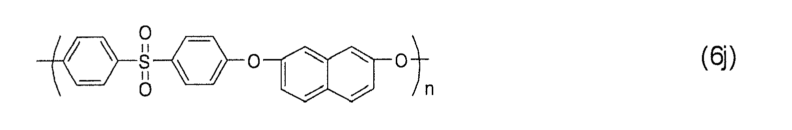

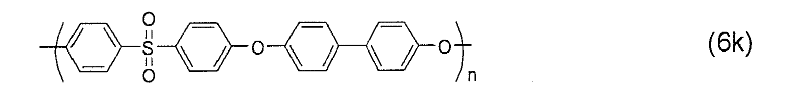

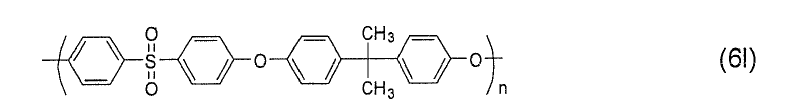

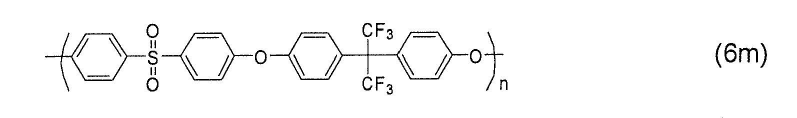

The polymer described above is preferably insoluble in water.

Examples of methods of obtaining a polymer insoluble in water include cross-linking using light or heat, increasing the molecular weight to an extremely high value, and copolymerization with a hydrophobic monomer.

Further, a polymer of the present invention has a main chain which is a polyarylene structure composed of a plurality of aromatic rings that are linked together substantially by direct bonds, wherein the polyarylene structure comprises a structural unit represented by the following formula (1) and a structural unit represented by the following formula (2a).

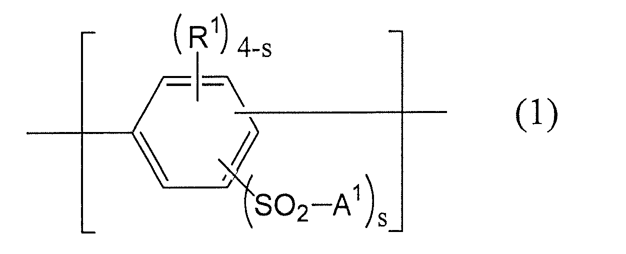

In formula (1), s represents 2 or 3, R¹ represents a hydrogen atom, a fluorine atom, an alkyl group of 1 to 20 carbon atoms that may have a substituent, an alkoxy group of 1 to 20 carbon atoms that may have a substituent, an aryl group of 6 to 20 carbon atoms that may have a substituent, an aryloxy group of 6 to 20 carbon atoms that may have a substituent, an acyl group of 2 to 20 carbon atoms that may have a substituent, or a cyano group, and in a case where s represents 2, the two R¹ groups may be the same as or different from each other.

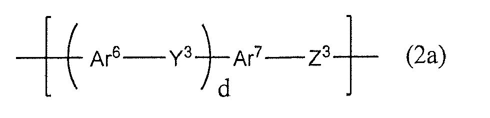

In the above formula, d represents 0 or 1; Ar⁶ and Ar⁷ each independently represents a divalent aromatic group, wherein the aromatic group may be substituted with a group selected from the group consisting of a fluorine atom, alkyl groups of 1 to 20 carbon atoms that may have a substituent, alkoxy groups of 1 to 20 carbon atoms that may have a substituent, aryl groups of 6 to 20 carbon atoms that may have a substituent, aryloxy groups of 6 to 20 carbon atoms that may have a substituent, and acyl groups of 2 to 20 carbon atoms that may have a substituent; Y³ represents a single bond, a carbonyl group, a sulfonyl group, a 2,2-isopropylidene group, a 2,2-hexafluoroisopropylidene group or a fluorene-9,9-diyl group; and Z³ represents an oxygen atom or a sulfur atom.

Specific examples of A¹ and R¹ include the same groups as those described above.

Ar⁶ and Ar⁷ each independently represents a divalent aromatic group, and specific examples thereof include the specific examples described above for Ar¹.

Representative examples of preferred structural units represented by the formula (2a) include the following (6a') to (6m').

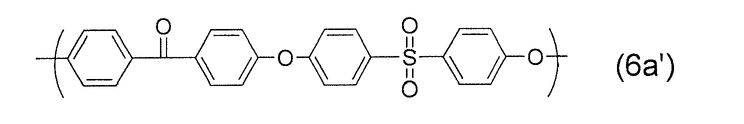

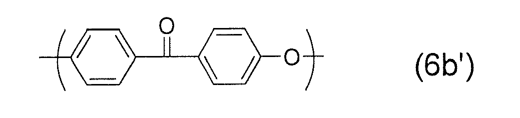

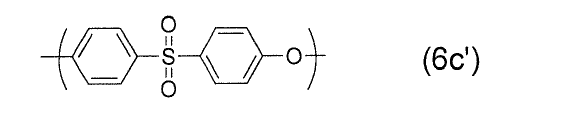

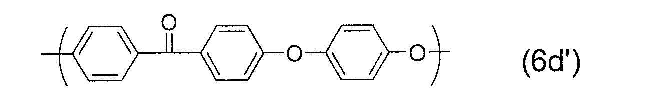

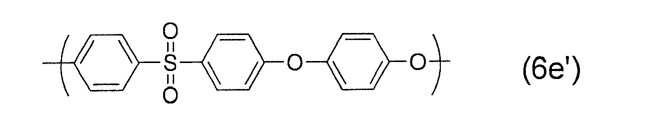

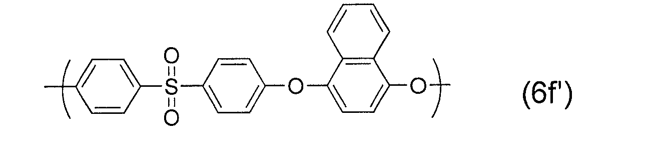

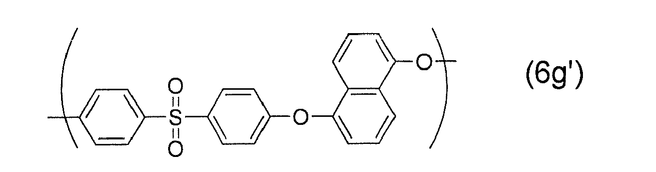

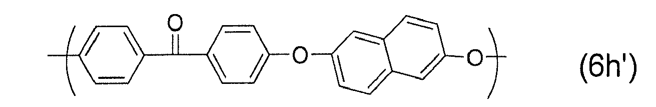

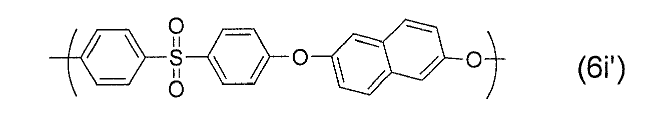

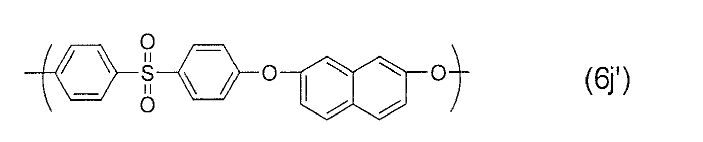

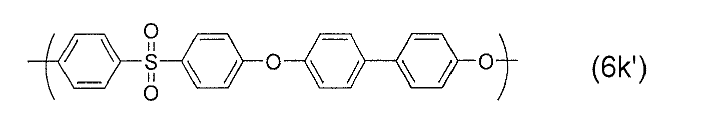

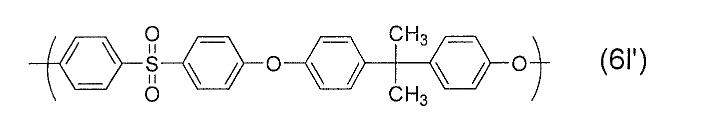

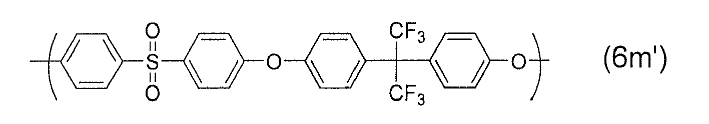

The structural unit represented by formula (2a) is preferably included as a block represented by the following formula (4).

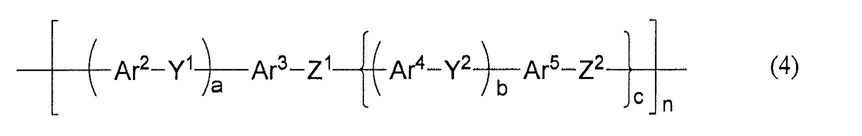

In the above formula, a, b and c are the same as or different from each other, and each represents 0 or 1, and n represents an integer of not less than 5; Ar², Ar³, Ar⁴ and Ar⁵ represent divalent aromatic groups, which may be the same as or different from each other; these divalent aromatic groups may be substituted with at least one substituent selected from the group consisting of a fluorine atom, a cyano group, alkoxy groups of 1 to 20 carbon atoms, aryl groups of 6 to 20 carbon atoms, and aryloxy groups of 6 to 20 carbon atoms; Y¹ and Y² each independently represents a single bond, a carbonyl group, a sulfonyl group, a 2,2-isopropylidene group, a 2,2-hexafluoroisopropylidene group or a fluorene-9,9-diyl group; and Z¹ and Z² each independently represents an oxygen atom or a sulfur atom.

In the case of a block copolymer containing a block having a polyarylene structure comprising a structural unit represented by formula (1), and a block represented by formula (4), the block copolymer may have a configuration in which these blocks are bonded directly together, or a configuration in which the blocks are bonded together via a suitable atom or group of atoms.

Representative examples of preferred blocks represented by formula (4) include the blocks described above.

In the above-mentioned polymer, the ratio of the structural units represented by formula (1) to the structural units represented by formula (2a), or the ratio of the structural units represented by formula (1) to the combination of the structural units represented by formula (2a) and other structural units may be selected within such a range that the structural units represented by formula (1), particularly those structural units represented by formula (1) that contain a sulfonic acid group, are capable of exhibiting a high degree of proton conductivity, and if the combined total of all the structural units that constitute the polymer is deemed to be 100 mol%, the amount of the structural units represented by formula (1) is preferably within a range of not less than 1 mol% and not more than 99 mol%, more preferably within a range of not less than 5 mol% and not more than 95 mol%, and still more preferably within a range of not less than 10 mol% and not more than 90 mol%.

A polymer containing the structural unit represented by formula (1), and particularly a structural unit represented by formula (1) that contains a sulfonic acid group, in the molar fraction is able to exhibit water resistance and heat resistance high enough for practical use, while satisfactorily maintaining a high degree of proton conductivity exhibited by the structural unit, and is therefore particularly useful for use as a proton-conducting material for a fuel cell or the like.

From such a viewpoint, if the combined total of all the structural units that constitute the polymer is deemed to be 100 mol%, the amount of the structural units represented by formula (2a) is preferably within a range of not less than 1 mol% and not more than 99 mol%, more preferably within a range of not less than 5 mol% and not more than 95 mol%, still more preferably within a range of not less than 10 mol% and not more than 90 mol%, and still more preferably within a range of not less than 20 mol% and not more than 80 mol%. Properties such as heat resistance and water resistance tend to be superior when the amount of the structural units represented by formula (2a) satisfies such a range.

Further, if the combined total of all the structural units in the polymer is deemed to be 100 mol%, the combination of the structural units represented by formula (1) and the structural units represented by formula (2a) is preferably not less than 80 mol%, more preferably not less than 90 mol%, still more preferably not less than 95 mol%, and still more preferably 99 mol% or more.

Furthermore, the above-mentioned polymer may contain a structural unit represented by the following formula (2) as a structural unit other than the structural unit represented by the formula (1) and the structural unit represented by the formula (2a). The polymer may also contain a structural unit represented by the formula (3): 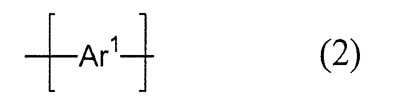 wherein Ar¹ represents a divalent aromatic group, and the aromatic group may be substituted with a group selected from the group consisting of a fluorine atom, alkyl groups of 1 to 20 carbon atoms that may have a substituent, alkoxy groups of 1 to 20 carbon atoms that may have a substituent, aryl groups of 6 to 20 carbon atoms that may have a substituent, aryloxy groups of 6 to 20 carbon atoms that may have a substituent, and acyl groups of 2 to 20 carbon atoms that may have a substituent.

Specific examples of the structural unit represented by formula (2) include those described above.

The polymer described above is preferably insoluble in water.

Examples of methods of obtaining a polymer insoluble in water include cross-linking using light or heat, increasing the molecular weight to an extremely high value, and copolymerization with a hydrophobic monomer.

In a case where each of the polymers of the present invention is to be used as a proton-conducting material, at least one group among the plurality of groups represented by -SO₂-A¹ in the structural unit represented by formula (1) is preferably a sulfonic acid group (SO₂-OH), and it is preferable that substantially all of the groups represented by - SO₂-A¹ in the polymer be sulfonic acid groups.

In other words, in each of the polymers of the present invention, it is preferable that substantially all of the structural units represented by formula (1) be structural units represented by the following formula (10): 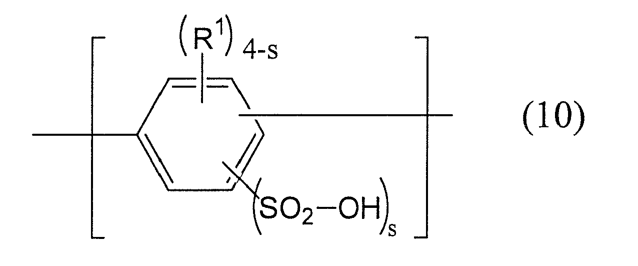 wherein R¹ and s are the same as defined for the formula (1).

Those structural units represented by formula (1) that has a group represented by (1b) in which R¹² is other than a hydrogen atom, or has a group represented by (1c), or has a group represented by (1a), namely a structural unit containing a precursor group to a sulfonic acid group, can be easily converted to a structural unit represented by formula (10) by a hydrolysis treatment, an ion-exchange treatment or a combination of these treatments.

It is preferable that the structural units represented by formula (1) include structural units in which two groups among the plurality of groups represented by -SO₂-A¹ are bonded to the benzene ring at mutual p-positions, and particularly structural units in which two sulfonic acid groups are bonded at mutual p-positions. A polymer that contains structural units in which two sulfonic acid groups are bonded at mutual p-positions tends to exhibit particularly superior proton conductivity. Although the reason why this effect occurs is unclear, the inventors of the present invention postulate the following. That is, it is surmised that if two sulfonic acid groups are bonded at p-positions on a benzene ring, the electron withdrawing effect of one of the sulfonic acid groups facilitates an increase in the acid strength of the other sulfonic acid group, making a high degree of proton conductivity more readily obtainable.

In the structural unit represented by the formula (1), the number s of bonded groups represented by -SO₂-A¹ is 2 or 3, but from the viewpoint of making the production of each of the polymers of the present invention described below easier, s is preferably 2. Similarly, from the viewpoint of making the production of each of the polymers of the present invention easier, R¹ is preferably a hydrogen atom or a fluorine atom, with a hydrogen atom being particularly preferable.

Further, in each of the polymers of the present invention, the above-mentioned polyarylene structure is preferably a structure in which the plurality of aromatic rings are linked at m-positions or p-positions.

In other words, the structural units represented by the above formula (1) preferably include a structural unit represented by the following formula (1X) and/or a structural unit represented by the following formula (1Y), and it is even more preferable that substantially all of the structural units represented by formula (1) be structural units represented by formula (1X) and/or structural units represented by formula (1Y). Polyarylene structures comprising structural units represented by formula (1X) and/or structural units represented by formula (1Y) as the structural units represented by formula (1) offer the advantage of easier production: 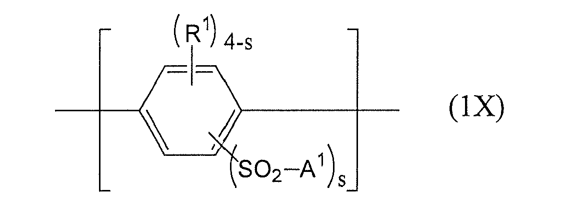 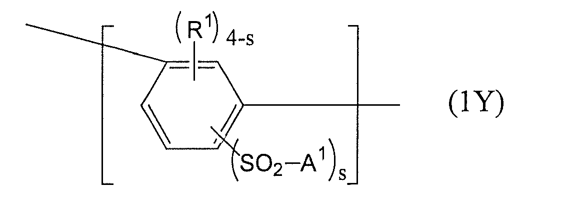 wherein A¹, R¹ and s are the same as defined for the formula (1).

Furthermore, in each of the polymers of the present invention, from the perspective of further improving the water resistance and the heat resistance, the above-mentioned polyarylene structure preferably contains a large number of structural units represented by formula (1X), and it is preferable that substantially all of the structural units represented by formula (1) be structural units represented by formula (1X).

Considering the points mentioned above, in order to facilitate the production of the polymer and achieve a higher degree of proton conductivity, a structural unit represented by the following formula (10X) and/or a structural unit represented by formula (10Y) is preferably included as the structural unit represented by formula (1), and it is even more preferable that substantially all of the structural units represented by formula (1) be structural units represented by formula (10X) and/or structural units represented by formula (10Y): 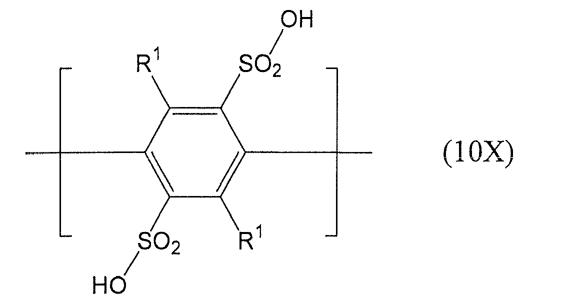 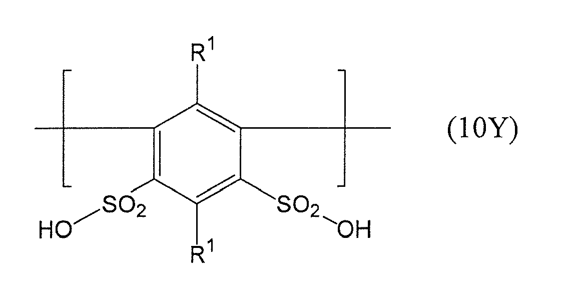 wherein R¹ is the same as defined for the formula (1).

Furthermore, the structural unit represented by the formula (10X) is also preferred in terms of the fact that, as described above, because the two sulfonic acid groups are bonded to the benzene ring in mutual p-positions, superior proton conductivity can be achieved.

Next, a description of a method of producing each of the polymers of the present invention is presented below.

The above-mentioned polymer can be produced using a compound represented by the following formula (1m) (hereinafter referred to as a "formula (1m) compound") as a monomer, by polymerizing the monomer: 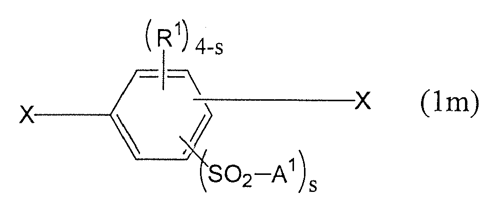 wherein R¹, A¹ and s are the same as defined for the formula (1), X represents a leaving group, and the two X groups may be the same as or different from each other.

In a case where a structural unit represented by the formula (1) and a structural unit represented by the formula (2) are to be incorporated in the polyarylene structure, the polyarylene structure can be produced using the above-mentioned formula (1m) compound and a compound represented by formula (2m) (hereinafter referred to as a "formula (2m) compound") as monomers, by polymerizing the monomers:

X-Ar¹-X (2m)

wherein Ar¹ is the same as defined for the formula (2), X represents a leaving group, and the two X groups may be the same as or different from each other.

In a case where a structural unit represented by the formula (1) and a structural unit represented by the formula (2a) are to be incorporated in the polymer, the polyarylene structure can be produced using the formula (1m) compound and a compound represented by formula (2am) (hereinafter referred to as a "formula (2am) compound") as monomers, by polymerizing the monomers: 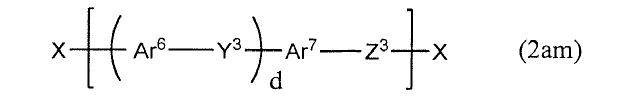 wherein Ar⁶, Ar⁷, Y³, Z³ and d are the same as defined for the formula (2a), X represents a leaving group, and the two X groups may be the same as or different from each other.

Further, in a case where a block represented by the formula (4) is to be incorporated as a structural unit represented by the formula (2a), the polymer can be produced by also using a compound represented by formula (4m) (hereinafter referred to as a "formula (4m) compound") as a monomer, and polymerizing the monomers: 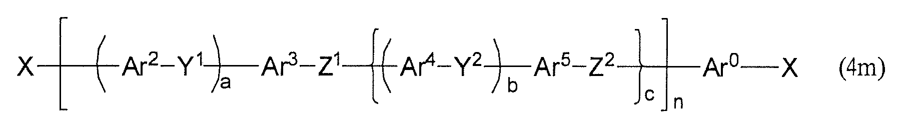 wherein Ar², Ar³, Ar⁴, Ar⁵, Y¹, Y², Z¹, Z², a, b, c and n are the same as defined for the formula (4), X represents a leaving group, the two X groups may be the same as or different from each other, and Ar⁰ represents a divalent aromatic group.

Furthermore, as mentioned above, each of the polymers of the present invention and/or the polyarylene structure associated with each of the polymers can include other structural units such as a structural unit represented by formula (3). In such cases, it is recommended to use a compound represented by the following formula (3m) (hereinafter referred to as a "formula (3m) compound") as a monomer in addition to the compounds described above and polymerize the monomers. In a case where other structural units are included, it is recommended to further use an appropriate corresponding monomer, and polymerize the monomers are polymerized: 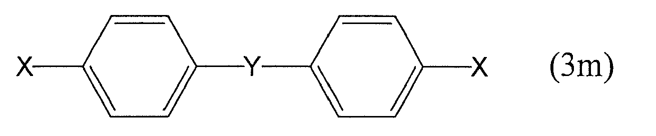 wherein Y is the same as defined for the formula (3), X represents a leaving group, and the two X groups may be the same as or different from each other.

The above-mentioned X is a leaving group that can be eliminated to form a polyarylene structure by the polymerization method described below, and examples thereof include a chloro group, a bromo group, an iodo group, a trifluoromethylsulfonyloxy group, an alkylsulfonyloxy group of 1 to 6 carbon atoms, and an arylsulfonyloxy group of 6 to 10 carbon atoms. Among these, a chloro group or a bromo group is particularly preferable as X.

Examples of formula (1m) compounds include the following compounds. These compounds can be obtained by sulfonating a dihalobenzene, or also by sulfonating a dihalobenzenethiol and then performing oxidation as described below in the method of production example 1.

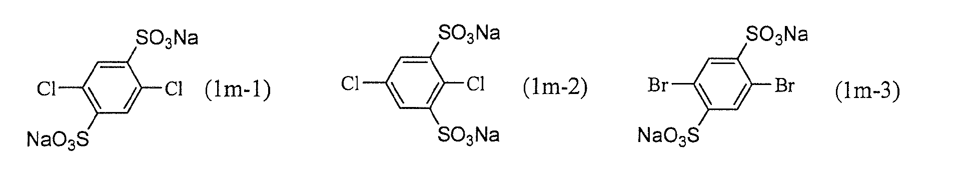

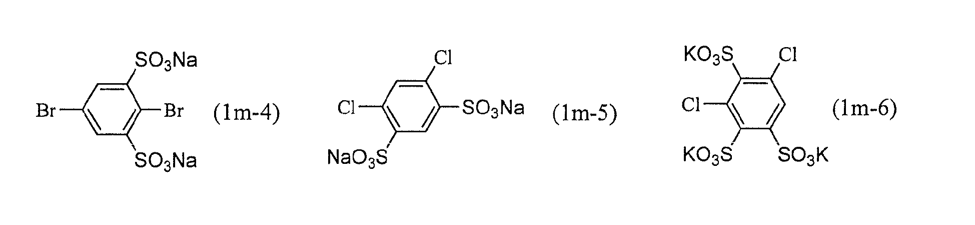

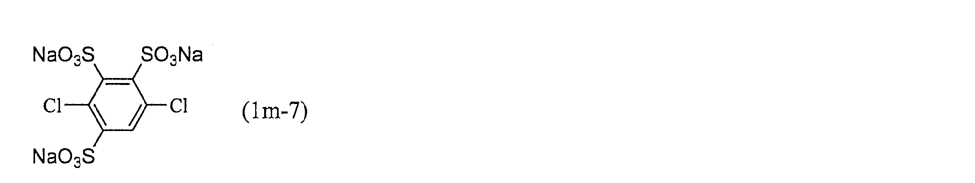

The compounds represented by the formulas (1m-1) to (1m-7) are shown with all of the groups represented by -SO₂-A¹ appearing as electrostatically equivalent sulfonate groups (such as -SO₂-ONa) with a monovalent alkali metal ion (Na ion or K ion), but in these compounds, some or all of these -SO₂-ONa or -SO₂-OK groups can be easily converted to sulfonic acid groups or precursor groups to sulfonic acid groups.

A description relating to a preferred method for performing the polymerization is presented below. The polymerization is preferably a polymerization that uses a zero-valent transition metal complex as a catalyst and in which a coupling reaction functions as the unit reaction, and a polymerization conducted in the presence of a zero-valent transition metal complex and a bidentate or higher-dentate compound (hereinafter sometimes referred to as a "coordination compound") that can coordinate with the central metal of the zero-valent transition metal complex is an even more preferred embodiment.

Nickel is preferred as the central metal of the zero-valent transition metal complex.

The nickel (0) complex may be either a zero-valent nickel complex (nickel (0) complex) such as nickel (0) bis(cyclooctadiene), nickel (0) (ethylene) bis(triphenylphosphine) and nickel (0) tetrakis(triphenylphosphine), or a nickel 0) complex prepared by reducing and complexing, in a reaction system, a divalent nickel compound such as a nickel halide (such as nickel fluoride, nickel chloride, nickel bromide and nickel iodide), a nickel carboxylate (such as nickel formate and nickel acetate), nickel sulfate, nickel carbonate, nickel nitrate, nickel acetylacetonate or nickel chloride (dimethoxyethane). Among these, the use of either nickel (0) bis(cyclooctadiene) or a nickel (0) complex prepared from a nickel halide in the reaction system is preferable in terms of obtaining the polymer of the present invention.

The amount used of the zero-valent transition metal complex can be appropriately optimized in accordance with the types of monomers used and the desired molecular weight of the polymer. If the amount used of the zero-valent transition metal complex is too small, then the polymerization tends to proceed poorly, whereas if the amount used is too large, then the post-processing following the polymerization sometimes becomes cumbersome. For example, in a case where a nickel (0) complex that represents a preferred zero-valent transition metal complex is used, the amount used of the nickel (0) complex is preferably 0.4 to 5 mols per 1 mol of the monomers used.

Including a coordination compound in addition to the zero-valent transition metal complex is particularly preferred because it improves the stability of the zero-valent transition metal complex itself during the reaction and enables the polymerization to proceed more smoothly. In a case where a nickel (0) complex is used as the catalyst, 2,2'-bipyridine, 1,10-phenanthroline, methylenebis(oxazoline) or N,N'-tetramethylethylenediamine or the like is preferred as the coordination compound, and 2,2'-bipyridine is particularly preferred. In a case where such a coordination compound is used, the amount used is usually within a range of 0.2 to 2 mols, and preferably within a range of 1 to 1.5 mols, per 1 mol of the central metal (nickel) of the nickel (0) complex.

As described above, a nickel (0) complex prepared within the polymerization reaction system using a divalent nickel compound can also be used as the nickel (0) complex. In such cases, a reducing agent capable of reducing the nickel is required. Zinc can be used favorably as the reducing agent, and this zinc is usually used in powdered form. When zinc is used, the amount used is usually not less than an equimolar amount and not more than 10-fold by mol, and preferably not less than an equimolar amount and not more than 5-fold by mol, per 1 mol of the monomers used. The upper limit for the amount of zinc used is selected so that the post-processing following the polymerization reaction does not become cumbersome, and so that the reaction does not become unviable economically. Using a combination of a divalent nickel compound and zinc is particularly advantageous in a case where the equivalent amount used of the divalent nickel compound is less than the equivalent amount of the monomers used.

The polymerization is usually carried out in the presence of a solvent. Any solvent that is capable of dissolving the monomers used and the produced polymer of the present invention can be used. Specific examples of the solvent include aromatic hydrocarbon solvents such as toluene and xylene; ether solvents such as tetrahydrofuran and 1,4-dioxane; aprotic polar solvents such as dimethyl sulfoxide (DMSO), N-methyl-2-pyrrolidone (NMP), N,N-dimethylformamide (DMF), N,N-dimethylacetamide (DMAc) and hexamethylphosphoric triamide; and halogenated hydrocarbon solvents such as dichloromethane and dichloroethane. These solvents may be used individually, or two or more may be used in combination. Among these, ether solvents and aprotic polar solvents are preferred, and tetrahydrofuran, dimethyl sulfoxide, N-methyl-2-pyrrolidone, N,N-dimethylacetamide, or a mixed solvent containing two or more of these solvents is even more preferred. If the amount used of the solvent is too large, the polymerization tends to proceed poorly, whereas if the amount is too small, the viscosity of the reaction solution resulting from the polymerization increases markedly, and a problem arises in that the post-processing becomes cumbersome, and therefore the amount of the solvent is usually 1 to 200-fold by weight, and preferably 5 to 100-fold by weight, based on the combined weight of the monomers used.

The polymerization is usually carried out under an atmosphere of an inert gas such as nitrogen gas.

Further, the polymerization temperature is usually within a range of 0 to 250°C, and preferably 30 to 100°C.

The polymerization time is usually selected from within a range of 0.5 to 48 hours, and for example, the polymerization time is preferably determined by sampling the reaction solution at prescribed intervals throughout the reaction and conducting measurements of the molecular weight and the like of the produced polymer, so that a polymer of the desired molecular weight can be obtained.

Various conventional techniques may be used for extracting the produced polymer from the reaction solution resulting from polymerization. Typically, a technique may be used in which a poor solvent that exhibits poor dissolution of the produced polymer is mixed with the reaction solution to precipitate the polymer, and the precipitated polymer is then isolated by filtration or the like, and this technique offers the advantage that the operations are very simple. Examples of the poor solvent include water, methanol, ethanol and acetonitrile, and water and methanol are preferred. The molecular weight and the chemical structure of the obtained polymer can be determined by usual analysis techniques such as gel permeation chromatography and nuclear magnetic resonance spectroscopy (NMR).

In a case where an above-mentioned block copolymer is to be produced, the polymerization is typically carried out using a compound that gives rise to a block represented by formula (4), namely a formula (4m) compound shown below, in addition to the formula (1m) compound and the formula (2m) compound: 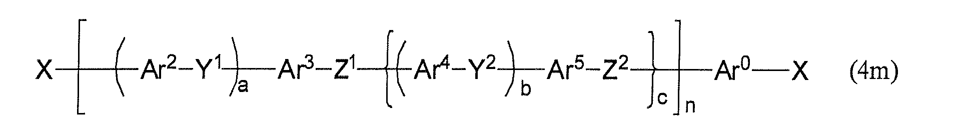 wherein Ar², Ar³, Ar⁴, Ar⁵, Y¹, Y², Z¹, Z², a, b, c and n are the same as defined for the formula (4), X represents a leaving group as defined for the formula (1m), the two X groups may be the same as or different from each other, and Ar⁰ represents a divalent aromatic group.

In this case, the polymerization conditions and the like can be easily carried out if the formula (3m) compound in the above-mentioned polymerization that uses a formula (3m) compound is replaced with a formula (4m) compound.

In this manner, in a case where a block copolymer is produced using a formula (1m) compound, a formula (2m) compound and a formula (4m) compound, the produced polymer becomes a block copolymer of a configuration in which a block formed from a structural unit represented by formula (1) and a structural unit represented by formula (2), and a block represented by formula (4) are bonded together with -Ar⁰- as a linking group.

Next is a description of a method in which following the production of a polymer using, as a monomer, a formula (1m) compound in which the group represented by -SO₂-A¹ is a group other than a sulfonic acid group, the group represented by -SO₂-A¹ is converted to a sulfonic acid group.

In a case where, in the group represented by -SO₂-A¹, A¹ is a group represented by the formula (1a), or A¹ is a group represented by the formula (1b) wherein R¹² in the formula (1b) is an alkyl group or an aryl group, these groups can be easily converted to a sulfonic acid group by a hydrolysis treatment.

An alkali metal halide or a quaternary ammonium halide preferably coexists during the hydrolysis treatment. Examples of the alkali metal halide include lithium bromide and sodium iodide, and examples of the quaternary ammonium halide include tetramethylammonium chloride and tetrabutylammonium bromide. Among these, performing the hydrolysis treatment in the presence of lithium bromide and tetrabutylammonium bromide is preferred.

Typical reaction conditions relating to the hydrolysis treatment are described below.

In a case where an alkali metal halide or quaternary ammonium halide is used, the amount used is determined based on the total amount of groups represented by -SO₂-A¹ in the polymer, and is usually preferably not less than 1-fold by mol relative to the groups represented by -SO₂-A¹. The reaction is usually carried in the presence of a solvent. First, the polymer containing the -SO₂-A¹ groups is dissolved in the solvent. With respect to the solvent, the variety of solvent and the amount used are determined in accordance with the solubility of the polymer, and it is preferable that the same solvent as that used during production of the polymer (during the polymerization) be used. It can be that the amount used of the solvent is usually 1 to 200-fold by weight, and preferably 5 to 50-fold by weight, based on the weight of the polymer being dissolved. The alkali metal halide and/or the quaternary ammonium halide is then added to the solution containing the dissolved polymer.

The reaction temperature is usually within a range of 0 to 250°C, and preferably 100 to 160°C.

While the reaction time is selected within a range of approximately 1 to 48 hours, the reaction time is preferably determined by ascertaining the progression of the reaction by using nuclear magnetic resonance spectroscopy (NMR) or infrared absorption spectroscopy (IR) or the like to confirm the conversion of the groups represented by - SO₂-A¹ to sulfonic acid groups, and then determining when the desired amount of conversion has occurred.

The sulfonic acid groups in the polymer following the hydrolysis treatment usually exist in the form of salts. Accordingly, an additional ion-exchange treatment is performed using an acid to convert the salt-form sulfonic acid groups to free acid sulfonic acid groups. In the ion-exchange treatment (acid treatment), a strong acid such as hydrochloric acid or sulfuric acid is preferably used and converted to an aqueous acid solution of an appropriate concentration, and the amount of the acid used is determined by the number of equivalents of the sulfonic acid groups generated by the hydrolysis treatment.

In a case where the groups represented by -SO₂-A¹ are sulfonic acid groups in salt form, such ion-exchange treatment converts the groups represented by -SO₂-A¹ into free sulfonic acid groups by ion-exchange.

The polymer of the present invention containing free sulfonic acid groups obtained in this manner is particularly useful as a proton-conducting material used in a fuel cell. When used as such a proton-conducting material, the ion-exchange capacity of the polymer is preferably set within a range of 0.5 to 8.5 meq/g, and more preferably 2.0 to 6.0 meq/g.

Next is a description of a case where the polymer of the present invention is used as a proton-conducting material, and particularly a proton-conducting membrane, of an electrochemical device such as a fuel cell.

In this case, the polymer of the present invention is usually used in the form of a membrane. Although the method used for transforming the polymer into a membrane is not particularly limited, in terms of ease of operation, it is preferable to use a method of forming the membrane from a solution state (a solution casting method).

Specifically, following the dissolution of the polymer of the present invention in a suitable solvent to form a polymer solution, this polymer solution is cast onto a support substrate, and the solvent is removed to form a membrane. The solvent used in the membrane formation is not particularly limited as far as it can dissolve the polymer and can be subsequently removed, and examples of solvents that can be preferably used include aprotic polar solvents such as DMF, DMAc, NMP and DMSO, chlorine-based solvents such as dichloromethane, chloroform, 1,2-dichloroethane, chlorobenzene and dichlorobenzene, alcohols such as methanol, ethanol and propanol, and alkylene glycol monoalkyl ethers such as ethylene glycol monomethyl ether, ethylene glycol monoethyl ether, propylene glycol monomethyl ether and propylene glycol monoethyl ether. Any one of these solvents may be used individually, or if required, two or more solvents can be used as a solvent mixture. Of the various possibilities, DMSO, DMF, DMAc and NMP and the like exhibit excellent dissolution of the polymer, and are therefore preferred. As the support substrate, a substrate that exhibits durability relative to the used polymer solution is preferred.

Although the thickness of the membrane is not particularly limited, the thickness is preferably 3 to 300 µm, particularly preferably 5 to 100 µm, and even more preferably 10 to 50 µm. A membrane having a thickness of not less than 10 µm provides a superior level of practical strength, and is therefore preferred, whereas a membrane having a thickness of not more than 300 µm tends to exhibit reduced membrane resistance and improved electrochemical device properties, and is therefore preferred. The thickness of the membrane can be controlled by altering the polymer concentration of the polymer solution and the thickness of the solution cast onto the substrate.

Further, plasticizers, stabilizers and release agents and the like used in common polymers may also be included in the membrane for the purpose of improving various physical properties of the membrane. Furthermore, another polymer may be subjected to composite alloying with the copolymer of the present invention by using a method in which mixed co-casting or the like is performed in a single solvent.

Moreover, in order to facilitate water control in fuel cell applications, the addition of inorganic or organic microparticles as a water retention agent is also known. Any of these known methods can be used, provided they do not act counter to the objects of the present invention. Further, the membrane can also be subjected to cross-linking by irradiation with an electron beam or radiation or the like, for the purpose of improving the mechanical strength and the like of the membrane.

Furthermore, in order to improve the mechanical properties such as achieving greater strength or better flexibility, the polymer of the present invention can also be impregnated into and complexed with a porous substrate to form a composite membrane. Known methods can be used for the complexing method.

The porous substrate is not particularly limited as far as it satisfies the purpose described above, and examples include a porous membrane, woven fabric, non-woven fabric or fibril, which may be used regardless of shape and regardless of the material used. Regarding the material for the porous substrate, from the viewpoint of heat resistance and in consideration of the reinforcing effect on the physical strength, an aliphatic polymer, an aromatic polymer or a fluoropolymer is preferred.

In a case where a composite membrane using the polymer of the present invention is used as a proton-conducting membrane for a fuel cell, the thickness of the porous substrate is preferably within a range of 1 to 100 µm, more preferably 3 to 30 µm and particularly preferably 5 to 20 µm, the pore size of the porous substrate is preferably within a range of 0.01 to 100 µm and more preferably 0.02 to 10 µm, and the porosity of the porous substrate is preferably within a range of 20 to 98% and more preferably 40 to 95%. Provided the thickness of the porous substrate is not less than 1 µm, the strength reinforcing effect achieved following complexing, or the reinforcing effect achieved as a result of the imparted flexibility or durability is superior, and gas leakage (cross leakage) is less likely to occur. Further, provided the thickness is not more than 100 µm, the electrical resistance is lower, and the resulting composite membrane performs better as a proton-conducting membrane of a solid polymer fuel cell. A pore size of not less than 0.01 µm facilitates the impregnation of the polymer of the present invention, whereas a pore size of not more than 100 µm yields a larger reinforcing effect on the polyarylenes. Provided the porosity is not less than 20%, the resistance as a proton-conducting membrane is reduced, and provided the porosity is not more than 98%, the strength of the porous substrate itself is increased, yielding a greater improvement in the reinforcing effect, which is preferable.

Next is a description relating to a fuel cell containing a proton-conducting material that uses the polymer of the present invention.

This fuel cell can be produced by bonding a catalyst layer to both surfaces of a proton-conducting membrane or composite membrane that uses the polymer of the present invention.

The catalyst layer comprises a catalyst material that is capable of activating the redox reaction with hydrogen or oxygen. It is preferable to use microparticles of platinum or a platinum-based alloy as the catalyst material. The microparticles of platinum or a platinum-based alloy are often supported on particulate or fiber-like carbon such as activated carbon or graphite.

Furthermore, a paste prepared by mixing carbon-supported platinum with an alcohol solution of a perfluoroalkylsulfonic acid resin as a polymer electrolyte is used as a catalyst ink, and the catalyst layer is then produced using this catalyst ink. Known methods can be used, and a specific example is the method disclosed in J. Electrochem. Soc.: Electrochemical Science and Technology, 1988, 135(9), 2209.

The polymer of the present invention can be used in place of the perfluoroalkylsulfonic acid resin used as the polymer electrolyte of the catalyst ink. A catalyst layer comprising the polymer of the present invention exhibits a satisfactory level of the superior proton conductivity of the polymer, and is therefore preferable as a catalyst layer.

Regarding the conductive substance that acts as a current collector, conventional substances can be used, and a porous carbon woven fabric, carbon non-woven fabric or carbon paper is preferable because it efficiently transports the raw material gases to the catalyst.

A fuel cell of the present invention produced in this manner can be used in all manner of configurations, using hydrogen gas, reformed hydrogen gas or methanol as the fuel.

Although embodiments of the present invention have been described above, the embodiments of the present invention disclosed above are merely exemplary, and the scope of the present invention is in no way limited by these embodiments. The scope of the present invention is indicated by the scope of the claims, and also includes all modifications having a meaning equivalent to the scope of the claims or included within the scope of the claims.

### EXAMPLES

The present invention is described below based on a series of examples, but the present invention is in no way limited by these examples.

### Measurement of molecular weight:

By using gel permeation chromatography (GPC), the polystyrene-equivalent number average molecular weight (Mn) and weight average molecular weight (Mw) were measured under the conditions described below.

### (GPC condition 1)

GPC measurement apparatus: HLC-8220, manufactured by Tosoh Corporation
Column: TSK-GEL GMH_{HR}-M, manufactured by Tosoh Corporation
Column temperature: 40°C
Mobile phase solvent: DMAc (LiBr was added to obtain 10 mmol/dm³)
Solvent flow rate: 0.5 mL/min

### (GPC condition 2)

GPC measurement apparatus: Prominence GPC System, manufactured by Shimadzu Corporation
Column: TSK-GEL GMH_{HR}-M, manufactured by Tosoh Corporation
Column temperature: 40°C
Mobile phase solvent: DMF (LiBr was added to obtain 10 mmol/dm³)
Solvent flow rate: 0.5 mL/min

### Measurement of ion-exchange capacity (IEC):

A polymer to be used for the measurement was formed into a membrane by the solution cast method to obtain a polymer membrane, and the obtained polymer membrane was cut in a suitable weight. The dry weight of the cut polymer membrane was measured by using a halogen moisture percentage tester set at a heating temperature of 110°C. Then, the polymer membrane thus dried was immersed in 5 mL of 0.1 mol/L sodium hydroxide aqueous solution, and thereafter, 50 mL of ion-exchange water was further added thereto, and left at rest for 2 hours. Thereafter, 0.1 mol/L hydrochloric acid was gradually added to the solution in which the polymer membrane was immersed to titrate the solution to determine a point of neutralization, and the ion-exchange capacity (unit: meq/g) of the polymer was calculated from the dry weight of the cut polymer membrane and the amount of hydrochloric acid needed for the neutralization. Measurement of proton conductivity (membrane plane direction):
Measured by an alternating-current method under conditions including a temperature of 80°C, and a relative humidity of 50% or a relative humidity of 90%.

### Measurement of proton conductivity (membrane thickness direction):

The proton conductivity was measured by an alternating-current method. There were prepared two measuring cells in which a carbon electrode was pasted on one surface of a silicone rubber (thickness: 200 µm) having a 1-cm² opening, and they were arranged so that the carbon electrodes might be opposed to each other, and terminals of an impedance measuring device were directly connected to the two cells described above. Then, the polymer electrolyte membrane obtained by the method described above in which ion-exchange groups had been converted into a proton type was set to between the measuring cells, and the resistance value between the two measuring cells was measured at 23°C. Thereafter, the polymer electrolyte membrane was removed, and the resistance value was measured again. The membrane resistance in the membrane thickness direction of the polymer electrolyte membrane was calculated on the basis the difference between two resistance values acquired for the state of having a polymer electrolyte membrane and the state of having no polymer electrolyte membrane. The proton conductivity in the membrane thickness direction of the polymer electrolyte membrane was calculated from the value of the membrane resistance and the membrane thickness acquired. As a solution to be brought into contact with both sides of the polymer electrolyte membrane, 1 mol/L dilute sulfuric acid was used.

### Production Example 1 [Production of disodium 2,5-dichlorobenzene-1,4-disulfonate]

A reaction vessel fitted with a stirrer was charged with 210.37 g of chloroform and 22.38 g of 2,5-dichlorobenzenethiol (manufactured by Tokyo Chemical Industry Co., Ltd., 125 mmol), and under an atmosphere of nitrogen, 87.50 g of fuming sulfuric acid (manufactured by Wako Pure Chemical Industries, Ltd., 625 mmol) was then added dropwise to the vessel at 25°C over a period of 30 minutes. Following the completion of the dropwise addition, the mixture was stirred for 8 hours at 25°C. Following the completion of the reaction, the pH was adjusted to a value from 8 to 9 using an aqueous solution of sodium hydroxide. The resulting mixture was concentrated until a weight of 600 g was obtained and then transferred to a reaction vessel fitted with a stirrer, and 69.14 g of potassium permanganate (manufactured by Wako Pure Chemical Industries, Ltd., 437.5 mmol) was then added to the vessel and dissolved at room temperature. Subsequently, the mixture was heated under reflux for 12 hours at 100°C. Following cooling to 25°C, methanol was poured into the mixture to completely deactivate the residual potassium permanganate. The mixture was then filtered, the funnel was washed with hot water, and the solvent was then removed from the filtrate. The resulting solid was washed with acetone and THF, and dissolved in DMSO. A second filtration was performed, the filtrate was added dropwise to acetone, and another filtration was performed to obtain a crude product. This crude product was dissolved in water and once again precipitated by adding dropwise to acetone to remove residual DMSO. The solid was isolated by suction filtration and vacuum dried at 100°C, yielding 30.67 g of disodium 2,5-dichlorobenzene-1,4-disulfonate (yield: 69.1 mol%, purity: 98.8%).
¹H-NMR (300 MHz, DMSO-d₆): δ 7.8 ppm (s, 2H)
¹³C-NMR (75 MHz, DMSO-d₆): δ 128.9 ppm, δ 131.3 ppm, δ 146.7 ppm,
MS (ESI method. Measurements conducted in Posi-mode and Nega-mode): 351.1

### Posi-mode

Based on the detection of ions at m/z = 372.8, 374.8 and 376.8 in a ratio of approximately 10:6:1, it was presumed that a sodium ion adduct of disodium 2,5-dichlorobenzene-1,4-disulfonate [M+Na]+ had been detected.

### Nega-mode

Based on the detection of ions at m/z = 326.8, 328.8 and 330.8 in a ratio of approximately 10:6:1, it was presumed that a sodium ion-removed molecule of disodium 2,5-dichlorobenzene-1,4-disulfonate [M-Na]- had been detected.

Identification of the product was performed by ¹H-NMR and ¹³C-NMR. In the ¹H-NMR, a singlet was observed in the aromatic region at δ 7.8 ppm. In the ¹³C-NMR, three signals were observed at δ 128.9 ppm, δ 131.3 ppm and δ 146.7 ppm. It is thought that four signals would have been observed in the ¹³C-NMR in the case of disodium 2,5-dichlorobenzene-1,3-disulfonate due to its symmetry, and it was therefore confirmed that disodium 2,5-dichlorobenzene-1,4-disulfonate had been produced selectively.

Hereinafter, this disodium 2,5-dichlorobenzene-1,4-disulfonate is called DCBDSNa.

### Example 1

A flask that had been flushed with argon was charged with 135 ml of DMSO, 3.51 g (10.0 mmol) of DCBDSNa, 6.00 g (23.9 mmol) of 2,5-dichlorobenzophenone and 13.20 g (84.5 mmol) of 2,2'-bipyridyl, and the mixture was stirred under heat at 60°C. Following confirmation that the solution became homogeneous, 23.72 g (86.2 mmol) of bis(1,5-cyclooctadiene) nickel (0) was added, and the mixture was stirred for 3 hours at 70°C. After cooling, the crude polymer was precipitated by pouring the reaction solution into 1,000 ml of methanol. The thus obtained crude polymer was washed several times with methanol, dried, and then immersed in 500 ml of 35% nitric acid. Subsequently, following several repetitions of the operations of washing the polymer in 35% nitric acid and then performing filtration, washing with water was done until the pH of the filtrate exceeded 4, and the resulting polymer was then dried, yielding 6.57 g of the targeted polymer A containing the structural units shown below.

The thus obtained polymer A was dissolved in DMSO at a concentration of 10 wt%, thus preparing a polymer electrolyte solution. Subsequently, the prepared polymer electrolyte solution was cast onto a glass substrate, and following the removal of the solvent by drying at 80°C under normal pressure, a hydrochloric acid treatment and washing with ion-exchanged water for not less than 2 hours were performed, yielding a polymer electrolyte membrane with a thickness of approximately 28 µm. Even during this series of water washing treatments, the membrane satisfactorily retained its form, and was insoluble in water. 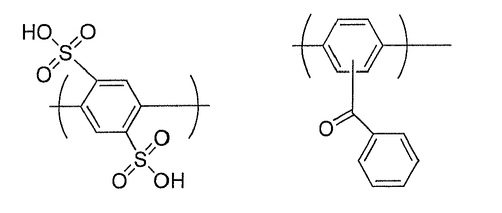
Mn (GPC condition 1): 2.6 × 10⁴
Mw (GPC condition 1): 5.6 × 10⁴
IEC: 2.8 meq/g
Proton conductivity in membrane plane direction:
2.5 × 10⁻² S/cm (relative humidity: 50%)
1.5 x 10⁻¹ S/cm (relative humidity: 90%)
Proton conductivity in membrane thickness direction: 7.4 × 10⁻² S/cm

### Example 2

With the exception of replacing a portion of the DCBDSNa in Example 1 with trisodium dichlorobenzenetrisulfonate, a polymer is produced in a similar manner to Example 1. Because the thus produced polymer has a greater number of sulfonic acid groups than the polymer A, a proton-conducting membrane having a higher proton conductivity can be obtained.

### Comparative Example 1

With the exception of charging the argon-flushed flask with sodium 2,5-dichlorobenzenesulfonate instead of DCBDSNa, a similar method to Example 1 was used to obtain a polymer B comprising the following structural units.

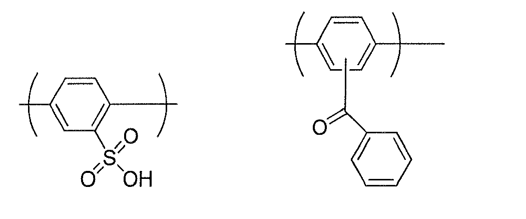

The thus obtained polymer B was dissolved in DMSO at a concentration of 10 wt%, thus preparing a polymer electrolyte solution. Subsequently, the prepared polymer electrolyte solution was cast onto a glass substrate, and following the removal of the solvent by drying at 80°C under normal pressure, a hydrochloric acid treatment and washing with ion-exchanged water for not less than 2 hours were performed, yielding a polymer electrolyte membrane with a thickness of approximately 37 µm.
Mn (GPC condition 2): 5.9 × 10³
Mw (GPC condition 2): 1.5 × 10⁴
IEC: 2.8 meq/g
Proton conductivity in membrane plane direction:
1.5 × 10⁻² S/cm (relative humidity: 50%)
9.8 × 10⁻² S/cm (relative humidity: 90%)
Proton conductivity in membrane thickness direction: 6.8 × 10⁻² S/cm

### Production Example 2 (Synthesis of 2,5-dichloro-1,4-benzenedisulfonyl chloride)

2.00 g (5.20 mmol) of potassium 2,5-dichloro-1,4-benzenedisulfonate, 30.0 mL (48.9 g, 411 mmol) of thionyl chloride and 5 drops of dimethylformamide were stirred for one hour at room temperature (27°C), and then stirred for 3 hours at 70°C. The reaction solution was poured into cold water, and following the addition of an appropriate amount of sodium bicarbonate (to yield a pH of approximately 9), the mixture was confirmed as being basic, an extraction operation into ethyl acetate solvent was performed 3 times, the resulting solution was dried over sodium sulfate, and the solvent was then removed, yielding a pale yellow powder. The thus obtained powder was stirred for one hour in cold methanol, yielding 1.57 g of a white powder of 2,5-dichloro-1,4-benzenedisulfonyl chloride. Molar yield: 80.0%
¹H-NMR (CDCl₃, δ (ppm)): 8.39 (s, 2H)

### Production Example 3 (Synthesis of neopentyl 2,5-dichloro-1,4-benzenedisulfonate)

610 mg (15.3 mmol) of 60% sodium hydride and 43.6 mL of toluene were stirred at room temperature. To this mixture was added, dropwise over a period of 10 minutes, a solution prepared by dissolving 1.39 g (15.7 mmol) of 2,2-dimethylpropanol in 26.2 mL of toluene, and the resulting mixture was then stirred for one hour at 50°C to effect a reaction. A solution prepared by dissolving 1.50 g (4.36 mmol) of 2,5-dichloro-1,4-benzenedisulfonyl chloride in 34.9 mL of toluene was added dropwise to the reaction mixture over a period of 15 minutes, and stirring was then continued for 8 hours at 35°C to effect a reaction. The reaction solution was poured into cold water, and a separation operation was performed to obtain a white powder. The thus obtained powder was stirred for one hour in hot methanol, yielding 488 mg of a white powder of neopentyl 2,5-dichloro-1,4-benzenedisulfonate. Molar yield: 25.0%
¹H-NMR (CDCl₃, δ (ppm)): 0.98 (s, 18H), 3.86 (s, 4H), 8.24 (s, 2H)
Mass spectrum (m/z): 446

### Production Example 4 (Synthesis of a block precursor A having no ion-exchange groups)

A flask fitted with an azeotropic distillation device was charged, under an atmosphere of nitrogen, with 50.0 g (174 mmol) of 4,4'-dichlorodiphenylsulfone, 39.4 g (158 mmol) of bis(4-hydroxyphenyl)sulfone, 22.9 g (165 mmol) of potassium carbonate, 203 mL of N-methylpyrrolidone (NMP) and 80 mL of toluene. The moisture in the system was removed azeotropically by heating under reflux at a bath temperature of 150°C, so that the generated water and toluene were removed, and then the temperature of the bath was increased to 180°C, and stirring was performed for 21 hours with the temperature maintained at this temperature. Following cooling, the reaction solution was poured into a 37% by weight hydrochloric acid / methanol solution (a mixed solution with a weight ratio of 1/1), and the resulting precipitate was collected by filtration, washed with ion-exchanged water until neutral, subsequently washed with methanol, and then dried. 77.3 g of the obtained crude product was dissolved in NMP, the resulting solution was poured into a 37% by weight hydrochloric acid / methanol solution (a mixed solution with a weight ratio of 1/1), and the resulting precipitate was collected by filtration, washed with ion-exchanged water until neutral, and then dried. 73.3 g of the target substance (hereinafter referred to as "block precursor A") was obtained. The molecular weight (GPC condition 2) of the thus obtained block precursor A having no ion-exchange groups was Mn = 9,700, Mw = 16,000, and n was 21.

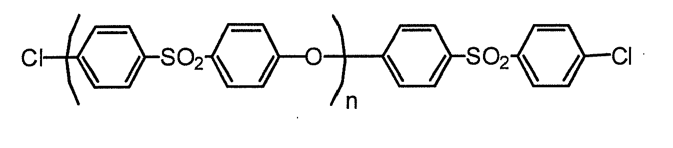

### Example 3

### [Synthesis of polymer C]

1.88 g (8.6 mmol) of anhydrous nickel bromide and 23.01 g of N-methyl-2-pyrrolidone were mixed together, and the internal temperature was adjusted to 80°C. To this mixture was added 1.50 g (9.6 mmol) of 2,2'-bipyridine, and the mixture was stirred at the same temperature for 10 minutes to prepare a nickel-containing solution.

A solution obtained by dissolving 1.2 g (2.2 mmol) of di(2,2-dimethylpropyl) 4,4'-dichlorobiphenyl-2,2'-disulfonate synthesized in accordance with the method disclosed in Example 1 of JP-2007-270118-A, 0.45 g (1.0 mmol) of neopentyl 2,5-dichloro-1,4-benzenedisulfonate and 0.52 g of the block precursor A (added weight/Mn = 0.096 mmol) in 10.7 g of tetrahydrofuran and 5.4 g of N-methyl-2-pyrrolidone was poured into the above-described nickel-containing solution which had been cooled to 50°C, and argon gas was bubbled through the system for 10 minutes at 50°C to remove residual oxygen from the system. Subsequently, 0.91 g (14 mmol) of zinc powder was added, and a polymerization reaction was conducted for 8 hours at 50°C. The reaction mixture was then poured into 100 mL of 35% nitric acid and stirred for one hour. Following several repetitions of the operations of washing in 35% nitric acid followed by filtration, washing with water until the pH of the filtrate exceeded 4. Subsequently, the product was washed several times with methanol and then dried, yielding 1.68 g of a gray-colored polymer C comprising a repeating unit represented by the following formula: 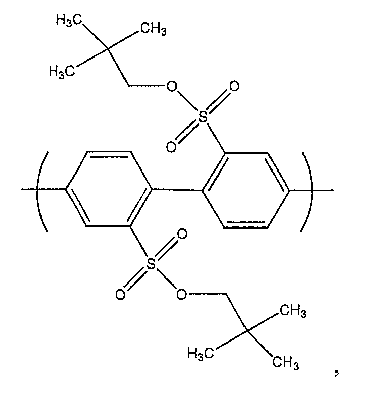 a repeating unit represented by the following formula: 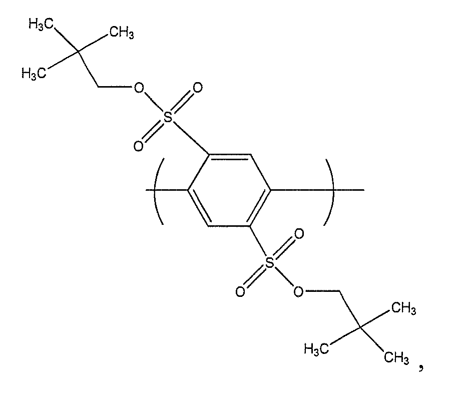 and a segment represented by the following formula: 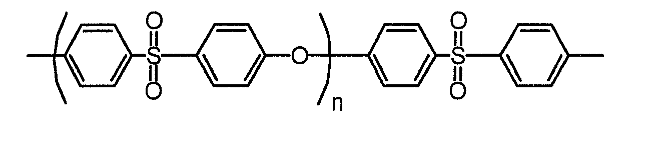 wherein n represents the number of repeating units.

### [Synthesis of polymer D]

1.7 g of the polymer C obtained above was added to a mixed solution containing 1.2 g (14 mmol) of anhydrous lithium bromide, 6.7 g of N-methyl-2-pyrrolidone and 0.24 g of water, and the resulting mixture was reacted for 12 hours at 120°C. The reaction mixture was then poured into 100 mL of 6 mol/L hydrochloric acid and stirred for one hour. The precipitated solid was isolated by filtration. Following several repetitions of immersion washing in a mixed solution of 50 mL of methanol and 50 mL of 12 mol/L hydrochloric acid, washing with water was done until the pH of the filtrate exceeded 4. Subsequently, the solid isolated by filtration was kept for one hour in 100 mL of hot water at 95°C. Following the hot water washing, the solid was separated by filtration and dried, thus completing the synthesis of a light yellow-colored polymer D comprising a repeating unit represented by the following formula: 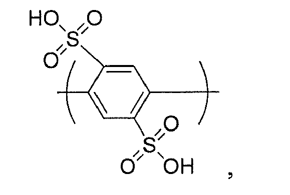 a segment having sulfonic acid groups, formed from a repeating unit represented by the following formula: 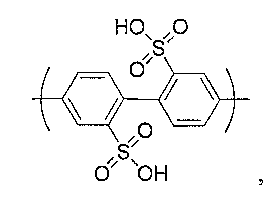 and a segment having no ion-exchange groups, represented by the following formula: 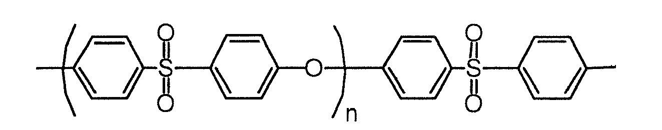 wherein n represents the number of repeating units.

### [Production of polymer membrane E]

A solution was prepared by dissolving the polymer D in DMSO so as to obtain a concentration of approximately 10% by weight, and the solution was cast onto a glass substrate. Following drying for 12 hours at 80°C under atmospheric pressure, the substrate was immersed in a large excess of 2N hydrochloric acid, and after washing in water for not less than 2 hours, the substrate was blown dry, yielding a homogenous membrane E with a thickness of 17 µm. Even during this series of water washing treatments, the membrane satisfactorily retained its form, and was insoluble in water.
- Mn (GPC condition 2):: 8.0 × 10⁴
- Mw (GPC condition 2):: 22.6 × 10⁴
- IEC:: 3.40 meq/g
- Proton conductivity in:
- membrane thickness direction:: 1.8 × 10⁻¹ S/cm

### Example 4

### [Synthesis of polymer F]

2.68 g (12.3 mmol) of anhydrous nickel bromide and 35.5 g of N-methyl-2-pyrrolidone were mixed together, and the internal temperature was adjusted to 80°C. To this mixture was added 2.11 g (13.5 mmol) of 2,2'-bipyridine, yielding a nickel-containing solution.

A solution obtained by dissolving 1.47 g (2.8 mmol) of di(2,2-dimethylpropyl) 4,4'-dichlorobiphenyl-2,2'-disulfonate synthesized in accordance with the method disclosed in Example 1 of JP-2007-270118-A, 0.9 g (2.0 mmol) of neopentyl 2,5-dichloro-1,4-benzenedisulfonate and 0.83 g of a block precursor represented by the following formula (added weight/Mn = 0.15 mmol): 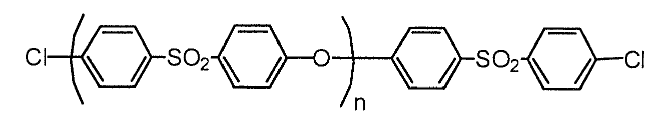 wherein n represents the number of repeating units,
in 12.4 g of tetrahydrofuran and 9.9 g of N-methyl-2-pyrrolidone was poured into the above-described nickel-containing solution which had been cooled to 50°C, and argon gas was bubbled through the system for 10 minutes at 50°C to remove residual oxygen from the system. Subsequently, 1.65 g (25.2 mmol) of activated zinc powder was added, and a polymerization reaction was conducted for 9 hours at 50°C. The reaction mixture was then poured into 100 mL of 35% nitric acid and stirred for one hour. Following several repetitions of the operations of washing in 35% nitric acid followed by filtration, washing with water was done until the pH of the filtrate exceeded 4. Subsequently, the product was washed several times with methanol and then dried, yielding 2.57 g of an ash gray-colored polymer comprising a repeating unit represented by the following formula: 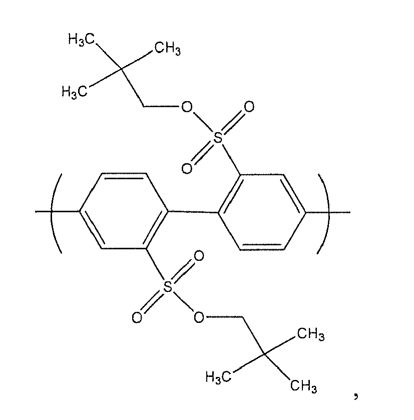 a repeating unit represented by the following formula: 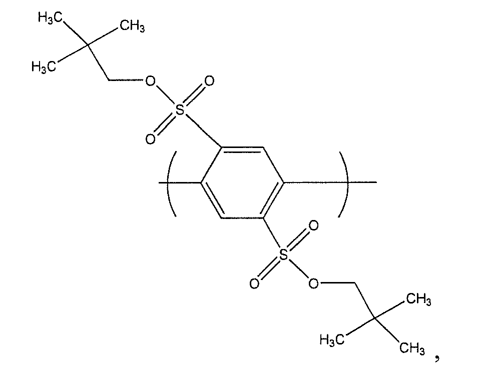 and a segment represented by the following formula: 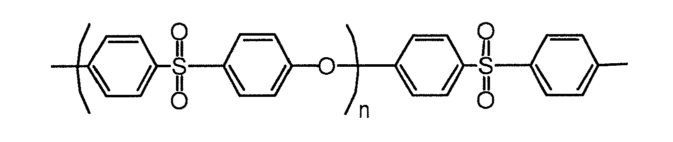 wherein n represents the number of repeating units.

### [Synthesis of polymer G]

2.57 g of the polymer F obtained above was added to a mixed solution containing 1.67 g (19.2 mmol) of anhydrous lithium bromide and 10.28 g ofN-methyl-2-pyrrolidone, and the resulting mixture was reacted for 12 hours at 120°C. The reaction mixture was then poured into 100 mL of 6 mol/L hydrochloric acid and stirred for one hour. The precipitated solid was isolated by filtration. Following several repetitions of immersion washing in a mixed solution of 50 mL of methanol and 50 mL of 12 mol/L hydrochloric acid, washing with water was done until the pH of the filtrate exceeded 4. Subsequently, the solid isolated by filtration was kept for one hour in 100 mL of hot water at 95°C. Following the hot water washing, the solid was separated by filtration and dried, thus completing the synthesis of a light yellow-colored polymer G comprising a repeating unit represented by the following formula: 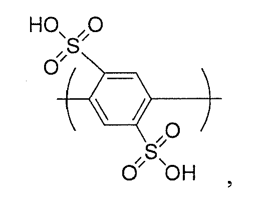 a segment having sulfonic acid groups, formed from a repeating unit represented by the following formula: 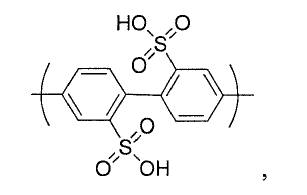 and a segment having no ion-exchange groups, represented by the following formula:

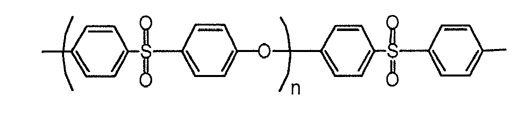

### [Production of polymer membrane H]

A solution was prepared by dissolving the polymer G in DMSO so as to obtain a concentration of approximately 3% by weight, and the solution was cast onto a glass substrate. Following drying for 12 hours at 80°C under atmospheric pressure, the substrate was immersed in a large excess of 2N hydrochloric acid, and after washing in water for not less than 2 hours, the substrate was blown dry, yielding a homogenous membrane H with a thickness of 25 µm, Even during this series of water washing treatments, the membrane satisfactorily retained its form, and was insoluble in water.
- Mn (GPC condition 2):: 9.1 × 10⁴
- Mw (GPC condition 2):: 9.1 × 10⁵
- IEC:: 3.69 meq/g
- Proton conductivity in:
- membrane thickness direction:: 2.0 × 10⁻¹ S/cm

### Comparative Example 2: [Synthesis of polymer I]

With the exception of using Sumikaexcel 3600P (manufactured by Sumitomo Chemical Co., Ltd.) in place of Sumikaexcel 5200P (manufactured by Sumitomo Chemical Co., Ltd.): 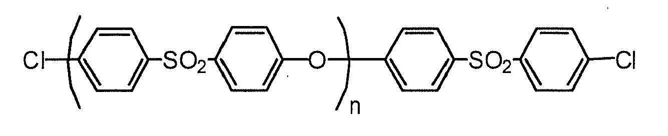 wherein n represents the number of repeating units,
polymer was synthesized in accordance with the method disclosed in Example 1, Example 4 and Example 5 of JP-2007-270118-A, yielding a polymer I comprising a segment having sulfonic acid groups, formed from the following repeating unit: 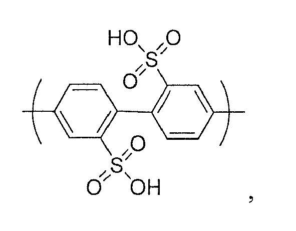 and a segment having no ion-exchange groups, represented by the following formula.

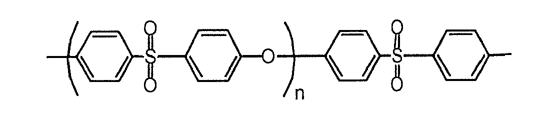

### [Production of polymer membrane J]

A solution was prepared by dissolving the polymer I in DMSO, and the solution was cast onto a PET substrate. Following drying for 12 hours at 80°C under atmospheric pressure, the substrate was immersed in a large excess of 2N hydrochloric acid, and after washing in water for not less than 2 hours, the substrate was blown dry, yielding a homogenous membrane J with a thickness of 15 µm. Even during this series of water washing treatments, the membrane satisfactorily retained its form, and was insoluble in water.
- Mn (GPC condition 2):: 2.8 × 10⁴
- Mw (GPC condition 2):: 6.4 × 10⁴
- IEC:: 3.3 meq/g
- Proton conductivity in:
- membrane thickness direction:: 1.4 × 10⁻¹ S/cm

### Comparative Example 3: [Synthesis of polymer K]

With the exception of using Sumikaexcel 3600P (manufactured by Sumitomo Chemical Co., Ltd.) in place of Sumikaexcel 5200P (manufactured by Sumitomo Chemical Co., Ltd.), polymer was synthesized in accordance with the method disclosed in Example 1, Example 4 and Example 5 of JP-2007-270118-A, yielding a polymer K comprising a segment having sulfonic acid groups, formed from the following repeating unit: 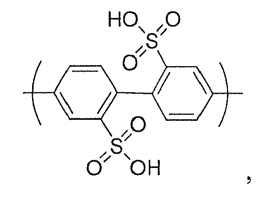 and a segment having no ion-exchange groups, represented by the following formula: 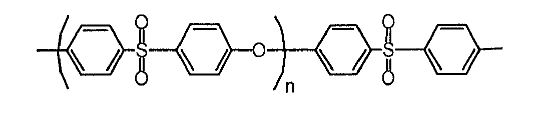 wherein n represents the number of repeating units.

### [Production of polymer membrane L]

A solution was prepared by dissolving the polymer K in DMSO, and the solution was cast onto a PET substrate. Following drying for 12 hours at 80°C under atmospheric pressure, the substrate was immersed in a large excess of 2N hydrochloric acid, and after washing in water for not less than 2 hours, the substrate was blown dry, yielding a homogenous membrane L with a thickness of 15 µm. Even during this series of water washing treatments, the membrane satisfactorily retained its form, and was insoluble in water.
- Mn (GPC condition 2):: 2.3 × 10⁴

- Mw (GPC condition 2):: 4.9 × 10⁴
- IEC:: 3.7 meq/g
- Proton conductivity in:
- membrane thickness direction:: 1.7 × 10⁻¹ S/cm

### Comparative Example 4: [Synthesis of polymer M]

With the exception of using the block precursor A having no ion-exchange groups, which was obtained using the method disclosed in Production Example 4 of the present application, in place of Sumikaexcel 5200P (manufactured by Sumitomo Chemical Co., Ltd.), polymer was synthesized in accordance with the method disclosed in Example 1, Example 4 and Example 5 of JP-2007-270118-A, yielding a polymer M comprising a segment having sulfonic acid groups, formed from the following repeating unit: 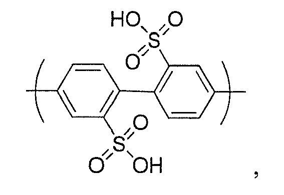 and a segment having no ion-exchange groups, represented by the following formula: 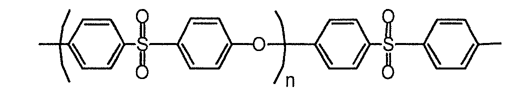 wherein n represents the number of repeating units.

### [Production of polymer membrane N]

A solution was prepared by dissolving the polymer M in DMSO, and the solution was cast onto a PET substrate. Following drying for 12 hours at 80°C under atmospheric pressure, the substrate was immersed in a large excess of 2N hydrochloric acid, and after washing in water for not less than 2 hours, the substrate was blown dry, yielding a homogenous membrane N with a thickness of 11 µm. Even during this series of water washing treatments, the membrane satisfactorily retained its form, and was insoluble in water.
- Mn (GPC condition 2):: 1.5 × 10⁵
- Mw (GPC condition 2):: 2.7 × 10⁵
- IEC:: 4.1 meq/g
- Proton conductivity in membrane thickness direction:: 1.9 × 10⁻¹ S/cm

From the above results it was clear that in a case where a polymer which was insoluble in water and contained, as a structural unit, a phenylene structure in which two or three hydrogen atoms had each been substituted with a group represented by the above-mentioned formula (A) was used to form as a polymer electrolyte membrane, the membrane exhibited superior proton conductivity compared with other polymer electrolyte membranes having similar IEC values.

A polymer electrolyte membrane comprising a polymer of the present invention is extremely useful in industry, including in fuel cells.

### INDUSTRIAL APPLICABILITY

By the use of the polymer of the present invention, a proton-conducting membrane (polymer electrolyte membrane) or the like with excellent proton conductivity can be obtained. Further, this proton-conducting membrane exhibits a proton conductivity high enough for practical use even under low-humidity conditions. Accordingly, the polymer of the present invention is very useful as a proton-conducting material for cells, and particularly a proton-conducting material for fuel cells (such as a proton-conducting membrane), and it is of great industrial utility value because the use of such a proton-conducting material is highly expected to realize the production of high-performance fuel cells.

## Claims

1. A polymer that is insoluble in water and that has, as a structural unit, a phenylene group in which two or three hydrogen atoms each have been substituted with a group represented by the following formula (A): 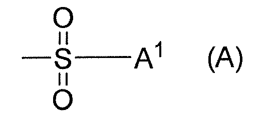 wherein A¹ represents a group represented by formula (1a), formula (1b) or formula (1c) below, and the two or three A¹ groups may be the same as or different from each other, 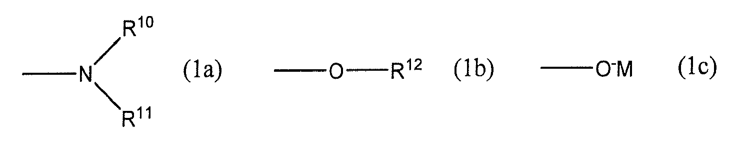 wherein R¹⁰ and R¹¹ each independently represents a hydrogen atom, an alkyl group of 1 to 20 carbon atoms, or an aryl group of 6 to 20 carbon atoms, R¹² represents a hydrogen atom, an alkyl group of 1 to 20 carbon atoms, or an aryl group of 6 to 20 carbon atoms, M represents a metal ion or an ammonium ion, and in a case where M represents a divalent or higher-valent metal ion, M may be further bonded to another substituent.

2. The polymer according to claim 1, wherein the structural unit is represented by formula (1): 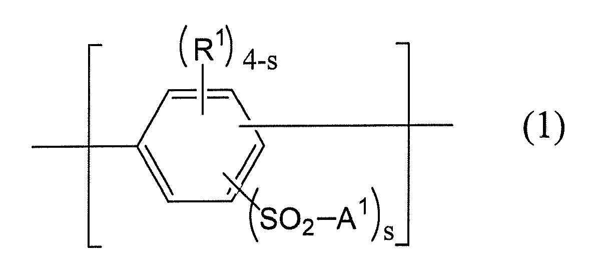 wherein s represents 2 or 3, R¹ represents a hydrogen atom, fluorine atom, alkyl group, alkoxy group, aryl group, aryloxy group, acyl group or cyano group, in a case where s represents 2, the two R¹ groups may be the same as or different from each other, and A¹ is as defined above.

3. A polymer, wherein the main chain has a polyarylene structure composed of a plurality of aromatic rings that are linked together substantially by direct bonds, and the polyarylene structure comprises a structural unit represented by formula (1) and a structural unit represented by formula (2): 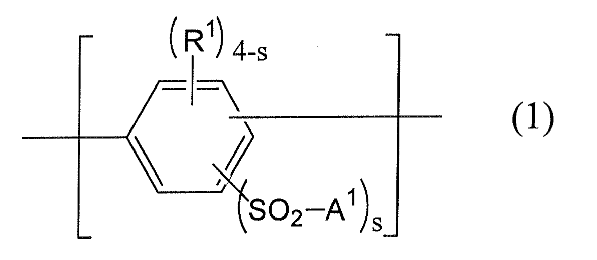 wherein s represents 2 or 3, A¹ represents a group represented by formula (1a), formula (1b) or formula (1c) below, and the two or three A¹ groups may be the same as or different from each other, R¹ represents a hydrogen atom, a fluorine atom, an alkyl group of 1 to 20 carbon atoms that may have a substituent, an alkoxy group of 1 to 20 carbon atoms that may have a substituent, an aryl group of 6 to 20 carbon atoms that may have a substituent, an aryloxy group of 6 to 20 carbon atoms that may have a substituent, an acyl group of 2 to 20 carbon atoms that may have a substituent, or a cyano group, and in a case where s represents 2, the two R¹ groups may be the same as or different from each other, 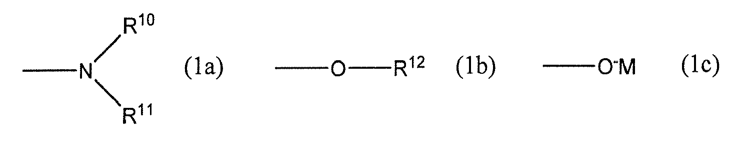 wherein R¹⁰ and R¹¹ each independently represents a hydrogen atom, an alkyl group of 1 to 20 carbon atoms, or an aryl group of 6 to 20 carbon atoms, R¹² represents a hydrogen atom, an alkyl group of 1 to 20 carbon atoms, or an aryl group of 6 to 20 carbon atoms, M represents a metal ion or an ammonium ion, and in a case where M represents a divalent or higher-valent metal ion, M may be further bonded to another substituent, 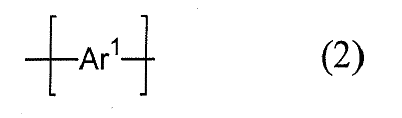 wherein Ar¹ represents a divalent aromatic group, and the aromatic group may be substituted with a group selected from the group consisting of a fluorine atom, alkyl groups of 1 to 20 carbon atoms that may have a substituent, alkoxy groups of 1 to 20 carbon atoms that may have a substituent, aryl groups of 6 to 20 carbon atoms that may have a substituent, aryloxy groups of 6 to 20 carbon atoms that may have a substituent, and acyl groups of 2 to 20 carbon atoms that may have a substituent.

4. A polymer comprising a structural unit represented by formula (1) and a structural unit represented by formula (2a): 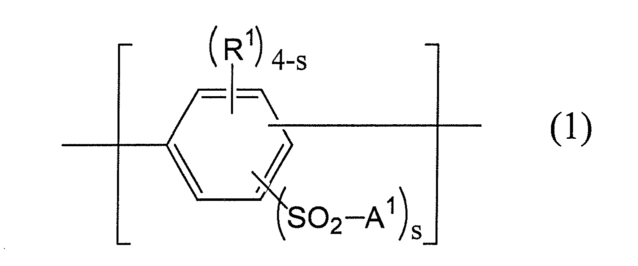 wherein s represents 2 or 3, A¹ represents a group represented by formula (1a), formula (1b) or formula (1c) below, and the two or three A¹ groups may be the same as or different from each other, R¹ represents a hydrogen atom, a fluorine atom, an alkyl group of 1 to 20 carbon atoms that may have a substituent, an alkoxy group of 1 to 20 carbon atoms that may have a substituent, an aryl group of 6 to 20 carbon atoms that may have a substituent, an aryloxy group of 6 to 20 carbon atoms that may have a substituent, an acyl group of 2 to 20 carbon atoms that may have a substituent, or a cyano group, and in a case where s represents 2, the two R¹ groups may be the same as or different from each other, 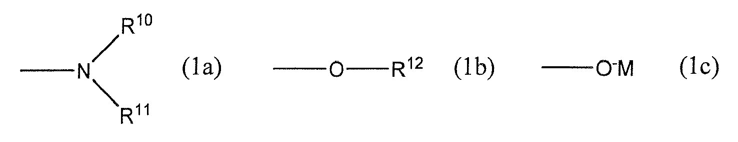 wherein R¹⁰ and R¹¹ each independently represents a hydrogen atom, an alkyl group of 1 to 20 carbon atoms, or an aryl group of 6 to 20 carbon atoms, R¹² represents a hydrogen atom, an alkyl group of 1 to 20 carbon atoms, or an aryl group of 6 to 20 carbon atoms, M represents a metal ion or an ammonium ion, and in a case where M represents a divalent or higher-valent metal ion, M may be further bonded to another substituent, 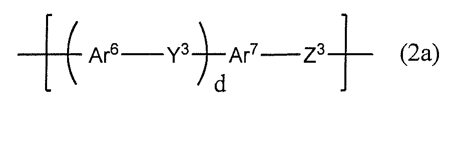 wherein d represents 0 or 1, Ar⁶ and Ar⁷ each independently represents a divalent aromatic group, the aromatic group may be substituted with a group selected from the group consisting of a fluorine atom, alkyl groups of 1 to 20 carbon atoms that may have a substituent, alkoxy groups of 1 to 20 carbon atoms that may have a substituent, aryl groups of 6 to 20 carbon atoms that may have a substituent, aryloxy groups of 6 to 20 carbon atoms that may have a substituent, and acyl groups of 2 to 20 carbon atoms that may have a substituent, Y³ represents a single bond, a carbonyl group, a sulfonyl group, a 2,2-isopropylidene group, a 2,2-hexafluoroisopropylidene group or a fluorene-9,9-diyl group, and Z³ represents an oxygen atom or a sulfur atom.

5. The polymer according to claim 4 comprising a block represented by formula (4): 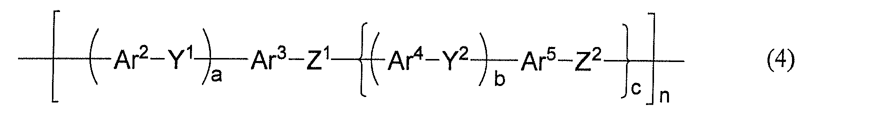 wherein a, b and c are the same as or different from each other, and each represents 0 or 1, n represents an integer of not less than 5, Ar², Ar³, Ar⁴ and Ar⁵ represent divalent aromatic groups which may be the same as or different from each other, each divalent aromatic group may be substituted with at least one substituent selected from the group consisting of a fluorine atom, a cyano group, alkoxy groups of 1 to 20 carbon atoms, aryl groups of 6 to 20 carbon atoms, and aryloxy groups of 6 to 20 carbon atoms, Y¹ and Y² each independently represents a single bond, a carbonyl group, a sulfonyl group, a 2,2-isopropylidene group, a 2,2-hexafluoroisopropylidene group or a fluorene-9,9-diyl group, and Z¹ and Z² each independently represents an oxygen atom or a sulfur atom.

6. The polymer according to claim 4 or 5 further comprising a structural unit represented by formula (2): 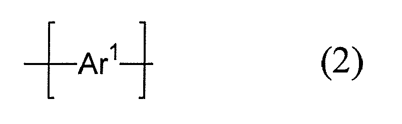 wherein Ar¹ represents a divalent aromatic group, and the aromatic group may be substituted with a group selected from the group consisting of a fluorine atom, alkyl groups of 1 to 20 carbon atoms that may have a substituent, alkoxy groups of 1 to 20 carbon atoms that may have a substituent, aryl groups of 6 to 20 carbon atoms that may have a substituent, aryloxy groups of 6 to 20 carbon atoms that may have a substituent, and acyl groups of 2 to 20 carbon atoms that may have a substituent.

7. The polymer according to any one of claims 3 to 6, wherein the polymer is insoluble in water.

8. The polymer according to any one of claims 2 to 7 comprising, as the structural unit represented by the formula (1), a structural unit in which s represents 2.

9. The polymer according to any one of claims 2 to 8 comprising, as the structural unit represented by the formula (1), a structural unit represented by formula (1X) below or a structural unit represented by formula (1Y) below: 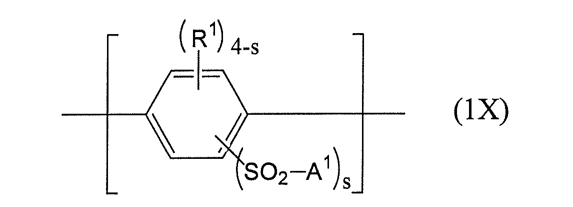 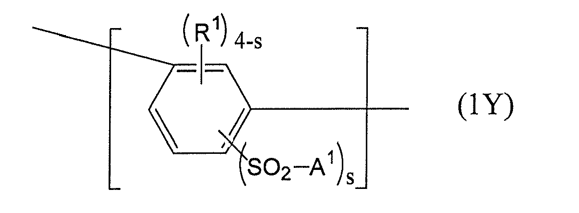 wherein A¹, R¹ and s are the same as defined for the formula (1).

10. The polymer according to any one of claims 2 to 9 comprising a structure represented by formula (1Z) below: 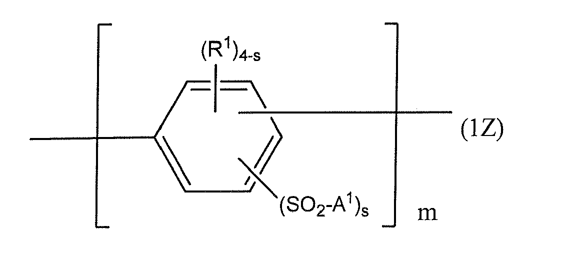 wherein A¹, R¹ and s are the same as defined for the formula (1), and m represents an integer of not less than 5.

11. The polymer according to any one of claims 2 to 10 comprising, as the structural unit represented by the formula (1), a structural unit in which two groups among the plurality of groups represented by -SO₂-A¹ are bonded to the benzene ring in mutual p-positions.

12. The polymer according to any one of claims 2 to 11 comprising, as the structural unit represented by the formula (1), a structural unit in which at least one of the plurality of groups represented by A¹ is -OH.

13. The polymer according to any one of claims 2 to 12, wherein if a combined total of all structural units is deemed to be 100 mol%, the amount of the structural unit represented by the formula (1) is within a range of not less than 1 mol% and not more than 99 mol%.

14. A polymer electrolyte comprising the polymer according to any one of claims 1 to 13.

15. A polymer electrolyte membrane comprising the polymer electrolyte according to claim 14.

16. A polymer electrolyte membrane comprising a polymer having, as a structural unit, a phenylene group in which two or three hydrogen atoms each have been substituted with a group represented by the following formula (A): 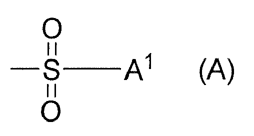 wherein A¹ represents a group represented by formula (1a), formula (1b) or formula (1c) below, and the two or three A¹ groups may be the same as or different from each other, 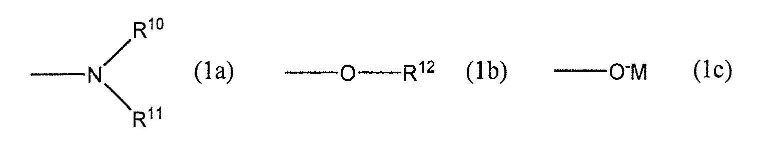 wherein R¹⁰ and R¹¹ each independently represents a hydrogen atom, an alkyl group of 1 to 20 carbon atoms, or an aryl group of 6 to 20 carbon atoms, R¹² represents a hydrogen atom, an alkyl group of 1 to 20 carbon atoms, or an aryl group of 6 to 20 carbon atoms, M represents a metal ion or an ammonium ion, and in a case where M represents a divalent or higher-valent metal ion, M may be further bonded to another substituent.

17. A catalyst composition comprising the polymer electrolyte according to claim 14 and a catalyst material.

18. A membrane electrode assembly comprising a catalyst layer formed from the polymer electrolyte membrane according to claim 15 or 16 or from the catalyst composition according to claim 17.

19. A solid polymer fuel cell comprising the membrane electrode assembly according to claim 18.
